# EUROPÄISCHE PATENTSCHRIFT

(11) **EP 1 138 092 B1**
(45) Veröffentlichungstag und Bekanntmachung des Hinweises auf die Patenterteilung: **25.09.2002**
(21) Anmeldenummer: 99955945.3
(22) Anmeldetag: 02.11.1999
(51) Int. Cl.: H01M 2/16, H01M 4/62, H01M 4/02, H01M 10/40

(54) **ALS SEPARATOREN IN ELEKTROCHEMISCHEN ZELLEN GEEIGNETE VERBUNDKÖRPER**
COMPOSITE BODIES USED AS SEPARATORS IN ELECTROCHEMICAL CELLS
CORPS COMPOSITES S'UTILISANT COMME SEPARATEURS DANS DES CELLULES ELECTROCHIMIQUES

(30) Priorität: 04.11.1998 DE 19850826
(43) Veröffentlichungstag der Anmeldung: 04.10.2001
(73) Patentinhaber: BASF AKTIENGESELLSCHAFT, 67056 Ludwigshafen (DE)
(72) Erfinder: BAUER, Stephan, D-67126 Hochdorf-Assenheim (DE); BRONSTERT, Bernd, D-67166 Otterstadt (DE); MÖHWALD, Helmut, D-76855 Annweiler (DE); BLUM, Rainer, D-67069 Ludwigshafen (DE); DÖTTER, Gerhard, D-67067 Ludwigshafen (DE)
(74) Vertreter: Isenbruck, Günter, Dr.
(86) Internationale Anmeldenummer: EP9908369
(87) Internationale Veröffentlichungsnummer: WO00026977

(56) Entgegenhaltungen:
- EP-A- 0 715 364
- WO-A-97/37395
- DE-A- 19 612 769

## Beschreibung

Die vorliegende Erfindung betrifft Verbundkörper, die sich insbesondere als Separatoren für elektrochemische Zellen, vorzugsweise wiederaufladbare Zellen und insbesondere Lithiumbatterien und Lithiumionenbatterien eignen, diese Separatoren bzw. elektrochemischen Zellen an sich, sowie ein Verfahren zur Herstellung dieser Verbundkörper.

Elektrochemische, insbesondere wiederaufladbare Zellen sind allgemein bekannt, beispielsweise aus "Ullmann's Encyclopedia of Industrial Chemistry'', 5. Ed., Vol A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u. a. in obigem Zitat aus "Ullmann" beschrieben, lithiierte Mangan-, Cobalt-, Vanadium- oder Nickel-Mischoxide, wie sie im stöchiometrisch einfachsten Fall als LiMn₂O₄, LiCoO₂, LiV₂O₅ oder LiNiO₂ beschrieben werden können.

Mit Verbindungen, die Lithiumionen in ihr Gitter einbauen können, wie z. B. Graphit, reagieren diese Mischoxide reversibel unter Ausbau der Lithiumionen aus dem Kristallgitter, wobei in diesem die Metallionen wie Mangan-, Cobaltoder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei üblicherweise auf Ableitelektroden mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Kathodenmaterial.

Zur Vermeidung eines Kurzschlusses innerhalb der elektrochemischen Zelle befindet sich zwischen den beiden Elektroden eine elektrisch isolierende, für Lithiumkationen aber durchgängige Schicht. Dies kann ein sogenannter Festelektrolyt oder ein gewöhnlicher Separator sein.

Festelektrolyte und Separatoren bestehen bekanntermaßen aus einem Trägermaterial, in das eine dissoziierbare, Lithiumkationen enthaltende Verbindung zur Erhöhung der Lithiumionenleitfähigkeit und üblicherweise weitere Zusatzstoffe wie Lösungsmittel inkorporiert werden.

Als Separatoren werden seit einiger Zeit mikroporöse Folien vorgeschlagen. So beschreibt die GB 2 027 637 eine mikroporöse Folie, die eine Matrix mit 40 bis 90 Vol.-% eines Polyolefins, 10 bis 60 Vol.-% eines anorganischen Füllstoffs und weitere Bestandteile, wie jeweils darin definiert, umfaßt. Die darin beschriebene Matrix weist 30 bis 95 Vol.-% Leerstellen, bezogen auf das Folienvolumen, auf und stellt einen Separator für Bleiakkumulatoren dar.

Ein zweilagiger Batterieseparator mit Shutdown-Charakteristik wird in der EP-B 0 715 364 beschrieben. Der dort beschriebene Batterieseparator weist eine erste mikroporöse Membran mit einer Abschaltfunktion auf, die aus einem Material hergestellt ist, das aus Polyethylen, einem Blend, das im wesentlichen Polyethylen umfaßt, und einem Copolymer von Polyethylen ausgewählt ist; ferner weist er eine zweite mikroporöse Membran mit einer Festigkeitsfunktion auf, die aus einem Material hergestellt ist, das aus Polypropylen, einem Blend, das im wesentlichen Polypropylen umfaßt, und einem Copolymer von Polypropylen ausgewählt ist. Ausweislich der Beschreibung weist dieser Separator eine verglichen mit dem Stand der Technik verbesserte mechanische Festigkeit und Durchgangsenergie auf.

Ein dreilagiger Batterieseparator mit Shutdown-Charakteristik wird in der EP-A 0 718 901 beschrieben. Dieser Separator umfaßt eine erste und dritte mikroporöse Polypropylen-Membran, die wiederum eine mikroporöse Polyethylenmembran einschließt, wobei die erste und dritte Membran eine größere Durchstoßfestigkeit und einen höheren Schmelzpunkt als die zweite Membran aufweisen.

Ein Verbund-Polymerelektrolyt in Membranform, der ein ionenleitendes Polymergel aufgebracht auf einem Matrix-Material aus einer porösen Polytetrafluoroethylen-Membran aufweist, wird in der EP-A-0 708 791 beschrieben.

In Anbetracht dieses Stands der Technik lag der vorliegenden Erfindung primär die Aufgabe zugrunde, einen Separator bereitzustellen, der ebenfalls über einen Shutdown-Mechanismus verfügt und darüber hinaus eine Formstabilität bei hoher Temperatur (> 150 °C) und eine weiter verbesserte mechanische Festigkeit aufweist und darüber hinaus ausgezeichnete ionenleitende Eigenschaften besitzt.

Somit betrifft die vorliegende Erfindung einen Verbundkörper, umfassend mindestens eine erste Schicht, die eine Zusammensetzung enthaltend
(a) 1 bis 99 Gew.-% eines Feststoffs (I) mit einer Primärpartikelgröße von 5 nm bis 100 µm oder ein Gemisch aus mindestens zwei Feststoffen,
(b) 99 bis 1 Gew.- % eines polymeren Bindemittels (II), das umfaßt:
   (IIa) 1 bis 100 Gew.-% eines Polymers oder Copolymers (IIa), das ketten, end- und/oder seitenständig Reaktivgruppen (RG) aufweist, die thermisch und/oder unter UV-Strahlung zu Vernetzungsreaktionen fähig sind, und
   (IIb) 0 bis 99 Gew.-% mindestens eines Polymers oder Copolymers (IIb), das frei ist von Reaktivgruppen RG,
umfaßt, wobei die mindestens eine erste Schicht auf mindestens eine zweite Schicht, umfassend mindestens einen konventionellen Separator, aufgebracht ist.

Die in der mindestens einen ersten Schicht enthaltene Zusammensetzung und deren Herstellung wird im folgenden nunmehr detailliert beschrieben.

Der Feststoff I wird vorzugsweise ausgewählt aus der Gruppe bestehend aus einem anorganischen Feststoff, vorzugsweise einem anorganischen basischen Feststoff, ausgewählt aus der Gruppe bestehend aus Oxiden, Mischoxiden, Carbonaten, Silicaten, Sulfaten, Phosphaten, Amiden, Imiden, Nitriden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; Glasmehl, Nanoglaspartikel, wie z. B. Monosper® (Fa. Merck), Mikroglaspartikel, wie z. B. Spheriglas® (Fa. Potters-Ballotini), Nanowhisker und einem Gemisch aus zwei oder mehr davon, wobei eine Zusammensetzung erhalten wird, die als Festelektrolyt und/oder Separator verwendet werden kann.

Beispielhaft zu nennen sind insbesondere: Oxide, wie z. B. Siliciumdioxid, Aluminiumoxid, Magnesiumoxid oder Titandioxid, Mischoxide, beispielsweise der Elemente Silicium, Calcium, Aluminium, Magnesium, Titan; Silicate, wie z. B. Leiter-, Ketten-, Schicht- und Gerüstsilicate, wie z. B. Talk, Pyrophyllit, Muskovit, Phlogopit, Amphibole, Nesocilicate, Pyroxene, Sorosilicate, Zeolithe, Feldspäte, Wollastonit, insbesondere hydrophobierter Wollastonit, Glimmer, Phyllosilicate; Sulfate, wie z. B. Alkali- und Erdalkalimetallsulfate; Carbonate, beispielsweise Alkali- und Erdalkalimetallcarbonate, wie z. B. Calcium-, Magnesium oder Bariumcarbonat oder Lithium-, Kalium oder Natriumcarbonat; Phosphate, beispielsweise Apatite; Amide; Imide; Nitride; Carbide; Polymere, wie z. B. Polyethylen, Polypropylen, Polystyrol, Polytetrafluorethylen, Polyvinylidenfluorid, Polyamide, Polyimide, oder andere Thermoplasten, Duromeren oder Mikrogele, vernetzte Polymerpartikel, wie z. B. Agfaperl®, Feststoffdispersionen, insbesondere solche, die die oben genannten Polymere enthalten, sowie Gemische aus zwei oder mehr der oben genannten Feststoffe.

Weiterhin können als Feststoff I erfindungsgemäß anorganische Li-Ionen leitende Feststoffe, vorzugsweise ein anorganischer basischer Li-Ionen leitenden Feststoff eingesetzt werden.

Dabei sind zu nennen: Lithiumborate, wie z. B. Li₄B₆O₁₁ * xH₂O, Li₃(BO₂)₃, Li₂B₄O₇ * xH₂O, LiBO₂, wobei x eine Zahl von 0 bis 20 sein kann; Lithium-Aluminate, wie z. B. Li₂O * Al₂O₃ * H₂O, Li₂Al₂O₄, LiAlO₂; Lithium-Aluminosilicate, wie z. B. Lithium enthaltende Zeolithe, Feldspäte, Feldspatvertreter, Phyllo- und Inosilicate, und insbesondere LiAlSi₂O₆ (Spodumen), LiAlSi₄O₁₀ (Petullit), LiAlSiO₄ (Eukryptit), Glimmer, wie z. B. K[Li,Al]₃[AlSi]₄O₁₀(F-OH)₂, K[Li,Al,Fe]₃ [AlSi]₄O₁₀(F-OH)₂; Lithium-Zeolithe, insbesondere solche in Faser-, Blatt-, oder Würfel-Form, insbesondere solche mit der allgemeinen Formel Li_{2/z}O * Al₂O₃ * xSiO₂ * yH₂O wobei z der Wertigkeit entspricht, x 1,8 bis ca. 12 und y 0 bis ca. 8 ist; Lithium-Carbide, wie z. B. Li₂C₂, Li₄C; Li₃N; Lithium-Oxide und -Mischoxide, wie z. B. LiAlO₂, Li₂MnO₃, Li₂O, Li₂O₂, Li₂MnO₄, Li₂TiO₃; Li₂NH; LiNH₂; Lithiumphosphate, wie z. B. Li₃PO₄, LiPO₃, LiAlFPO₄, LiAl(OH)PO₄, LiFePO₄, LiMnPO₄; Li₂CO₃; Lithium-Silicate in Leiter-, Ketten-, Schicht-, und Gerüst-Form, wie z. B. Li₂SiO₃, Li₂SiO₄ und Li₆Si₂; Lithium-Sulfate, wie z. B. Li₂SO₄, LiHSO₄, LiKSO₄; sowie die als Verbindung Ib genannten Li-Verbindungen, wobei bei deren Verwendung als Feststoff I die Anwesenheit von Leitruß ausgeschlossen ist; sowie Gemische aus zwei oder mehr der oben genannten Li-Ionen leitenden Feststoffe.

Bevorzugt werden als Feststoffe I hydrophobierte Feststoffe I, weiter bevorzugt hydrophobierte Verbindungen der oben genannten Art verwendet

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Die Feststoffe sollten vorteilhaft in der als Elektrolyt verwendeten Flüssigkeit weitestgehend unlöslich sowie in dem Batteriemedium elektrochemisch inert sein.

Besonders geeignet sind Feststoffe I, die eine Primärpartikelgröße von 5 nm bis 20 µm, vorzugsweise 0,01 bis 10 µm und insbesondere 0,1 bis 5 µm aufweisen, wobei die angegebenen Partikelgrößen durch Elektronenmikroskopie ermittelt werden. Der Schmelzpunkt der Pigmente liegt vorzugsweise über der für die elektrochemische Zelle üblichen Betriebstemperatur, wobei sich Schmelzpunkte von über 120 °C, insbesondere von über 150 °C als besonders günstig erwiesen haben.

Dabei können die Pigmente bzgl. ihrer äußeren Form symmetrisch sein, d. h. ein Größenverhältnis Höhe : Breite : Länge (Aspektverhältnis) von ungefähr 1 aufweisen und als Kugeln, Granalien, annähernd runde Gebilde, aber auch in Fonn von beliebigen Polyedern, wie z. B. als Quader, Tetraeder, Hexaeder, Octaeder oder als Bipyramide vorliegen, oder verzerrt oder asymmetrisch sein, d. h. ein Größenverhältnis Höhe : Breite : Länge (Aspektverhältnis) von ungleich 1 aufweisen und z. B. als Nadeln, asymmetrische Tetraeder, asymmetrische Bipyramiden, asymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primärpartikelgröße auf die jeweils kleinste Achse.

Die erfindungsgemäß verwendete Zusammensetzung umfaßt 1 bis 95 Gew.-%, vorzugsweise 15 bis 90 Gew.-%, weiter bevorzugt 25 bis 85 Gew.-%, insbesondere 50 bis 80 Gew.-% eines Feststoffs I, und 5 bis 99 Gew.-%, vorzugsweise 10 bis 85 Gew.-%, weiter bevorzugt 15 bis 75 Gew.-%, insbesondere 20 bis 50 Gew.-% des polymeren Bindemittels II.

Dieses polymere Bindemittel II umfaßt 1 bis 100 Gew.-% mindestens eines Polymers IIa, das ketten-, end- und/oder seitenständig Reaktivgruppen (RG) aufweist, die thermisch und/oder unter UV-Strahlung zu Vernetzungsreaktionen fähig sind, und 0 bis 99 Gew.-% mindestens eines Polymers oder Copolymers (IIb), das frei ist von Reaktivgruppen RG.

Als Polymere IIa können prinzipiell alle thermisch und/oder unter energiereicher Strahlung, bevorzugt unter UV-Licht vernetzbaren Polymeren verwendet werden, die ketten-, end- und/oder seitenständig Reaktivgruppen (RG), vorzugsweise Reaktivgruppen RGa oder RGb oder RGa und RGb aufweisen, über die, unter Wärme- und/oder Strahlungsaktivierung die Polymeren vernetzen können.

Weiter bevorzugt ist das Polymer IIa ein Polymer, das jeweils ketten-, endund/oder seitenständig mindestens eine erste Reaktivgruppe RGa und mindestens eine von RGa verschiedene, mit RGa coreaktive Gruppe RGb aufweist, wobei im Durchschnitt aller Polymermoleküle mindestes je eine RGa und eine RGb vorhanden ist.

Weiter kann das Polymer IIa gebildet werden aus einem Gemisch von mehreren Polymeren von denen ein Teil nur RGa und ein anderer Teil nur RGb aufweisen.

Weiter kann das Polymer IIa gebildet werden aus einem Gemisch von mehreren Polymeren von denen ein Teil nur RGa und ein anderer Teil nur RGb aufweisen und weiteren Polymeren die sowohl RGa und RGb aufweisen.

In der Regel wird das Polymer IIa gebildet aus einer einheitlichen Polymerklasse, bevorzugt aus der Klasse der Polyacrylate. Es sind aber auch Blends verschiedener Polymerklassen möglich

Das Polymer IIa umfaßt sowohl polymere als auch oligomere Stoffe sowie Mischungen aus polymeren und oligomeren Stoffen.

Die oligomere und/oder polymere Grundstruktur der Polymeren IIa umfaßt bekannte Polymeren wie sie z. B. aufgebaut werden durch -C-C-Verknüpfungen, die auch Doppel- und/oder Dreifachbindungen aufweisen können, sowie durch Ether-, Ester-, Urethan-, Amid-, Imid-, Imidazol-, Keton-, Sulfid-, Sulfon-, Acetal-, Harnstoff-, Carbonat- und Siloxanverknüpfungen.

Des weiteren kann die oligomere oder polymere Grundstruktur linear, verzweigtkettig, ringförmig oder dendrimer aufgebaut sein.

Die erfindungsgemäß verwendeten Polymere IIa können erhalten werden durch Polymerisation, Polyaddition oder Polykondensation von Monomerbausteinen, die neben den Gruppen über die der Polymeraufbau erfolgt, noch RGa und/oder RGb aurweisen, so daß erfindungsgemäß funktionalisierte Polymere IIa schon bei der Polymerherstellung gebildet werden.

Weiter können die erfindungsgemäßen Polymeren IIa erhalten werden durch polymeranaloge Umsetzung von funktionellen Polymeren, mit Verbindungen die RGa und/oder RGb und mindestens eine weitere Gruppe aufweisen, die mit den funktionellen Gruppen der oligomeren oder polymeren Grundstruktur reagieren können.

Weiter ist es möglich, eine der funktionellen Gruppen RGa und/oder RGb schon bei der Polymerherstellung einzubauen, und dann die andere RG in das fertige Polymer durch polymeranaloge Funktionalisierung einzuführen.

Gruppen RGa sind Gruppen die Strukturen aufweisen, die unter energiereicher Strahlung, bevorzugt UV-Licht im triplettangeregten Zustand zur Wasserstoffabstraktion befähigt sind (literaturbekannte Fotoinitiatorgruppen vom Norrish II-Typ). Solche Strukturen sind aus der Fotochemie dem Fachmann bekannt. Weiterhin werden hier die entsprechenden Acrylat(derivat)-Verbindungen, die derartige Strukturen aufweisen, aufgelistet. Weitere Details bzgl. dieser Verbindungen sind der US 5 558 911 zu entnehmen, deren diesbezüglicher Inhalt vollumfänglich durch Bezugnahme in den Kontext dieser Anmeldung aufgenommen wird. Selbstverständlich können auch andere Monomere, Oligomere oder Polymere, die derartige Strukturen RGa aufweisen, erfindungsgemäß eingesetzt werden. 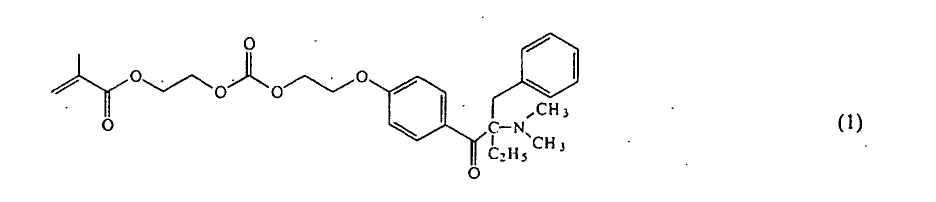 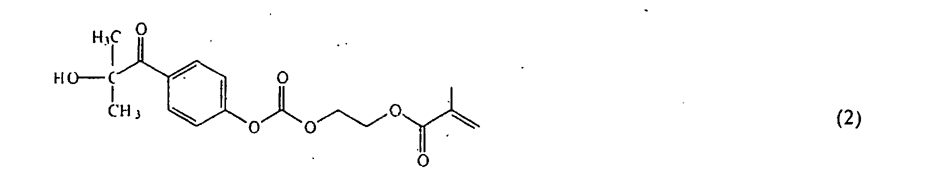 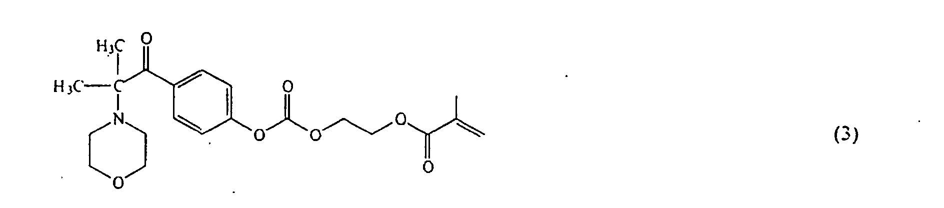 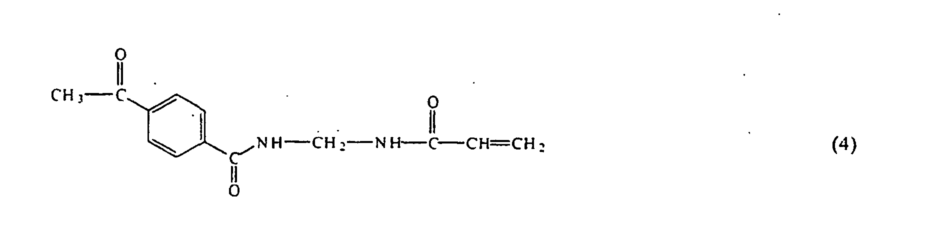 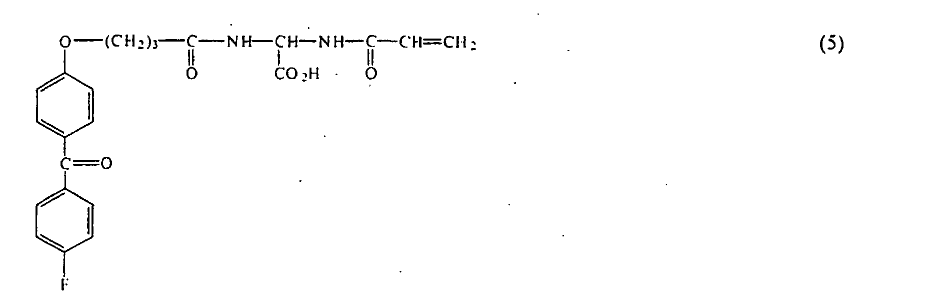 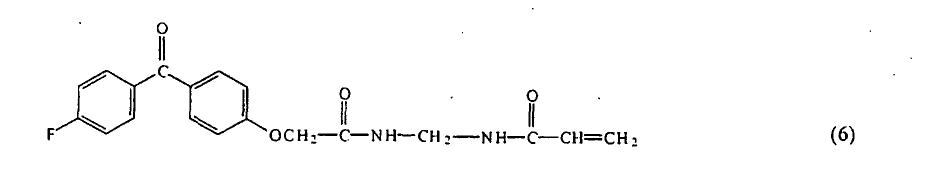 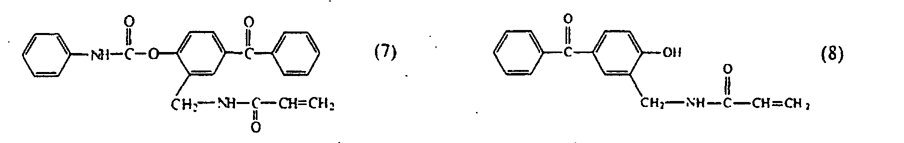 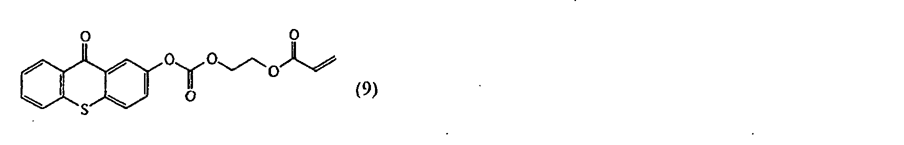 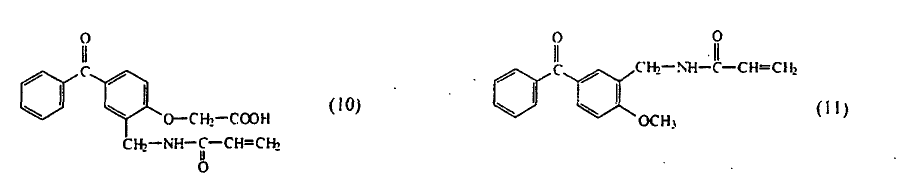 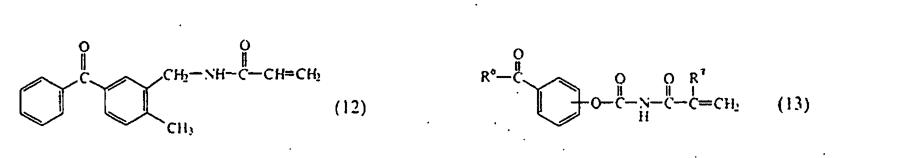 worin

R⁶ ―CH₃ oder ―C₆H₅

ist

R⁷ ―H oder ―CH₃

ist 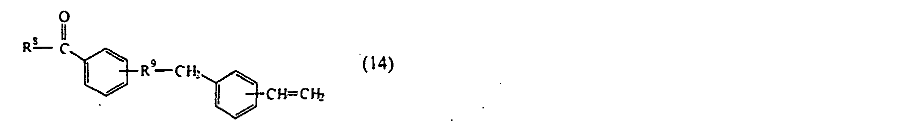 worin

R⁸ ―CₙC₂ₙ₊₁

ist, wobei n = 1 bis 3 oder ―C₆H₅, 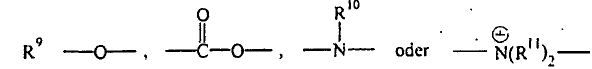 ist,

R¹⁰ ―H oder ―CₙH₂ₙ₋₁

ist, wobei n = 1 bis 8, und

R¹¹ ―CₙH₂ₙ₋₁

ist, wobei n = 1 bis 4

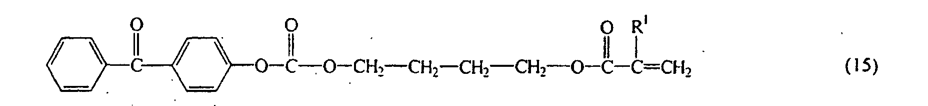

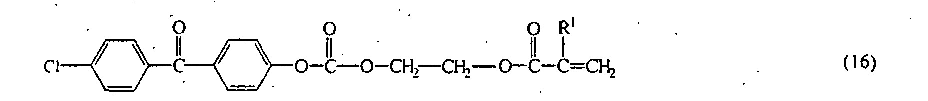

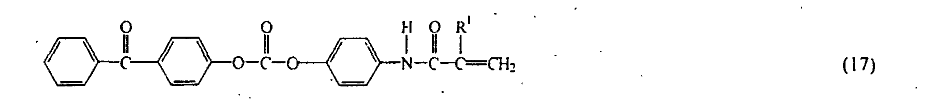

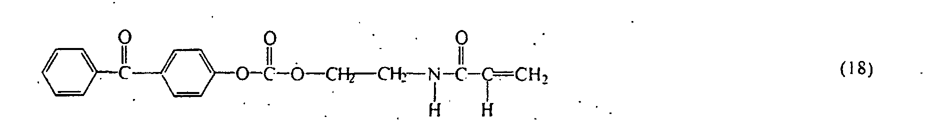

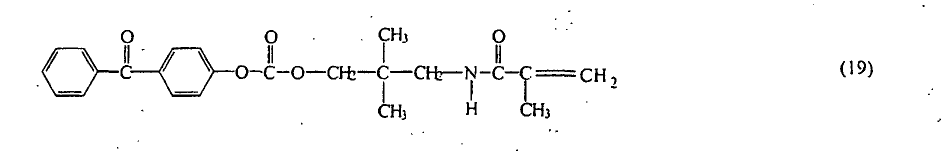

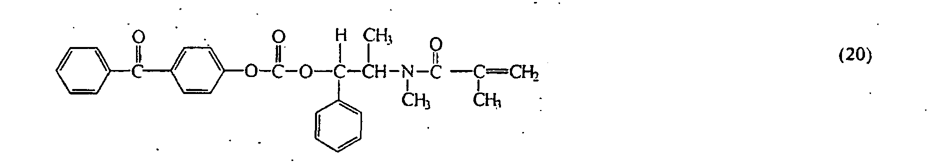

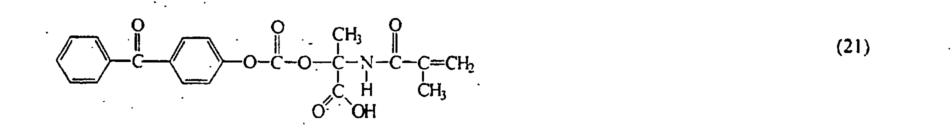

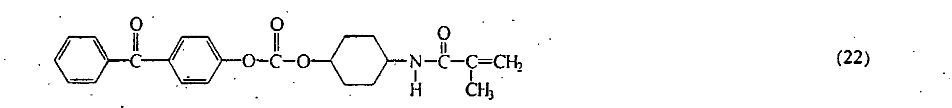

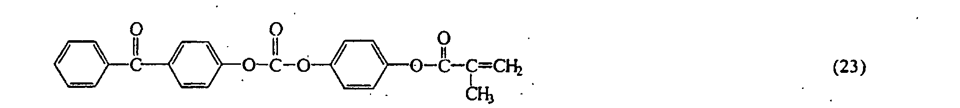

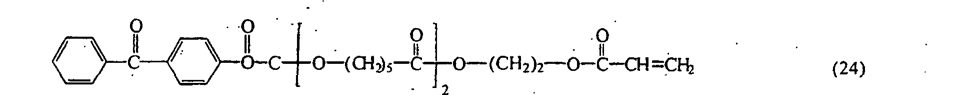

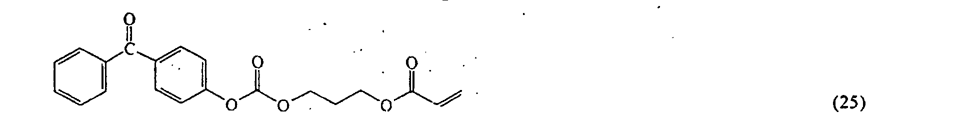

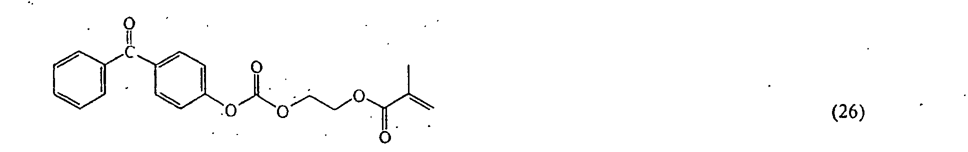

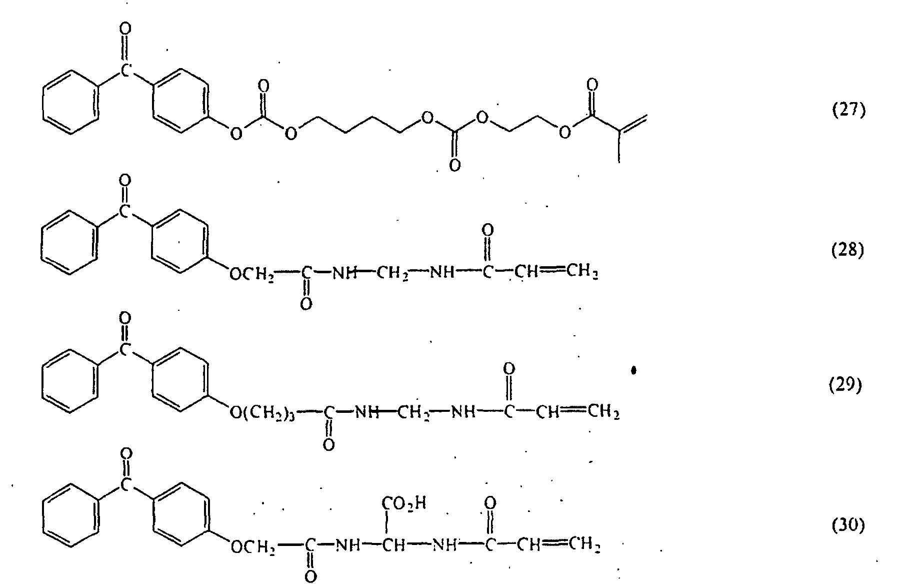

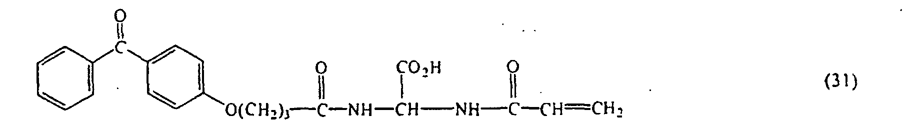

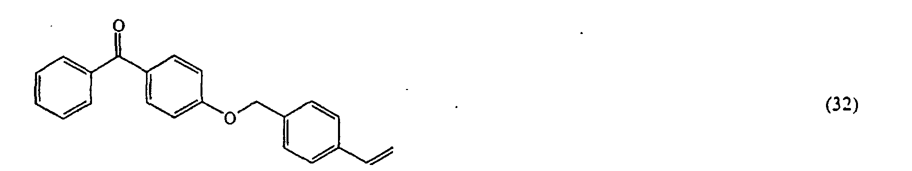

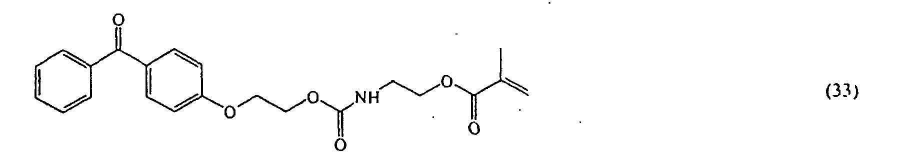

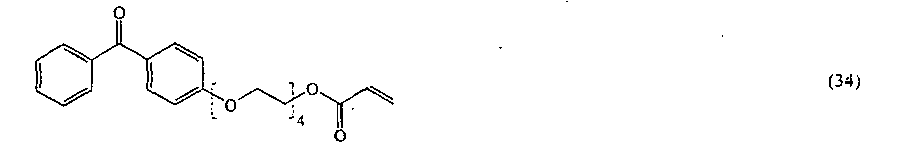

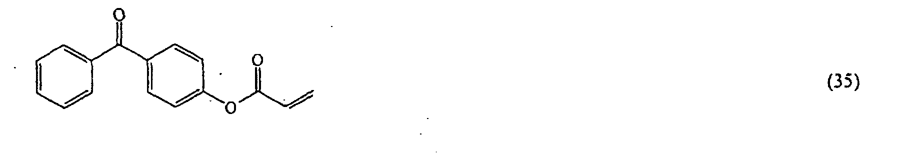

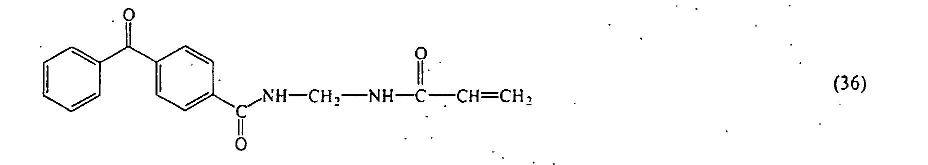

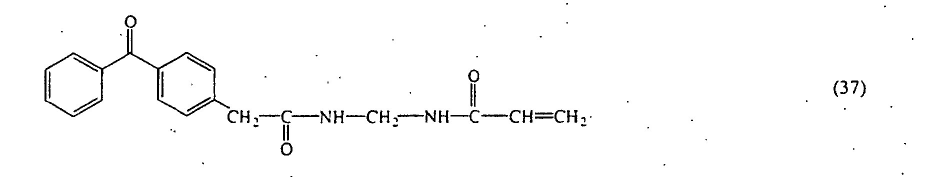

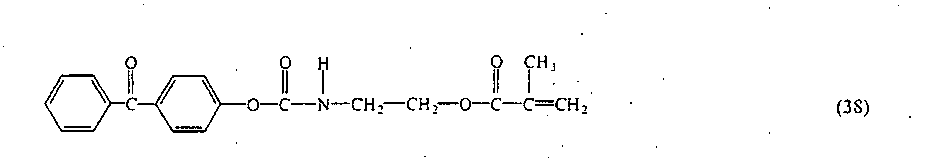

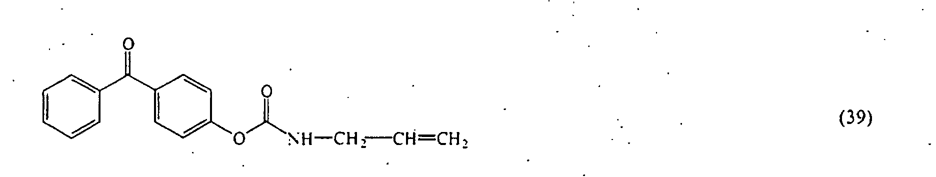

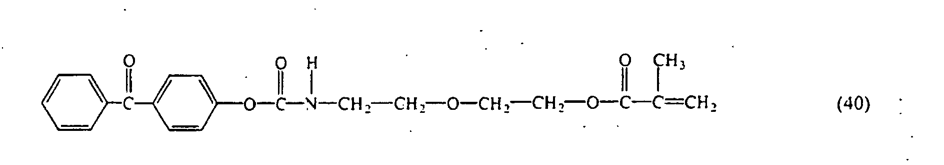

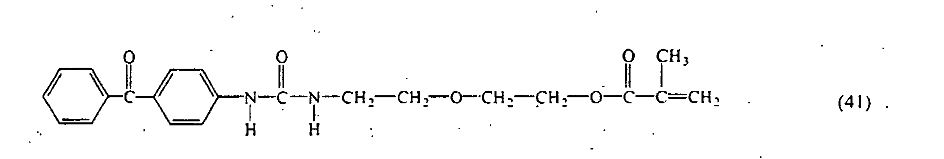

Über die Mitverwendung solcher RGa-Acrylate ist es z. B. sehr einfach möglich, durch Copolymerisation mit weiteren Acrylaten, Acrylatcopolymerisate zu erhalten, die mit RGa in erfindungsgemäßer Weise funktionalisiert sind.

Weiter können Grundpolymerisate mit z. B. Aminogruppen, aber ohne Gruppen RGa über eine Michael-Addition solcher RGa-Acrylate leicht mit RGa funktionalisiert werden.

Bevorzugt als RGa sind Benzophenongruppen. Besonders hohe UV-Reaktivität wird bei Polyacrylaten mit Benzophenonabkömmlingen erreicht, bei denen die Benzophenongruppe über eine Spacergruppe an die Polymerhauptkette gebunden ist. Besonders bevorzugte Polyacrylate sind erhältlich durch Copolymerisation mit Acrylaten der Formeln 24 bis 26 und der Formel 34.

Eine weitere kostengünstige und bevorzugte Möglichkeit RGa in Polymere einzuführen ist die Umsetzung von Hydroxybenzophenonen, bevorzugt 4-Hydroxybenzophenon mit den Epoxidgruppen eines Polymers, bevorzugt die Addition von 4-Hydroxybenzophenon an Polyacrylate mit Anteilen an Glycidyl(meth-)acrylat. Eine weitere elegante Methode ist die Reaktion eines Addukts aus einem Mol Diisocyanat mit einem Mol 4-Hydroxybenzophenon mit einem Polymer das freie Hydroxylgruppen aufweist.

Eine bevorzugte Methode RGa in Polyester einzuführen besteht in der Mitverwendung von Benzophenoncarbonsäuren bzw. von Benzophenoncarbonsäureanhydriden bei der Polykondensation oder die Umsetzung bzw. Veresterung von Polymeren mit Hydroxylgruppen, Epoxidgruppen, Isocyanatgruppen und/oder Aminogruppen mit Benzophenoncarbonsäuren bzw. Benzophenoncarbonsäureanhydriden.

Gruppen RGb sind Gruppen, die mit angeregten Norrish II-Fotoinitiator-Gruppen wechselwirken können. Als solche Wechselwirkungen ist besonders die Wasserstoffübertragung auf die Norrish II-Struktur dem Fachmann bekannt, sodaß es zur Ausbildung von Radikalen kommt, sowohl beim H-Donor als auch bei der abstrahierenden Norrish II -Struktur. Über eine Radikalkombination ist eine direkte Vernetzung der Polymeren möglich. Weiter ist auch der Start einer radikalisch initiierten Polymerisation von z. B. polymerisierbaren funktionellen Gruppe RGb z. B. Maleinat-, Fumarat-, (Meth)acrylat-, Allyl-, Epoxid-, Alkenyl-, Cycloalkenyl-, Vinylether-, Vinylester-, Vinylaryl- und Cinnamatgruppen durch die fotochemisch erzeugten Radikale möglich.

Bevorzugt sind RGb die als H-Donor mit RGa wechselwirken, d. h. doppelbindungsfreie Systeme. Ein systemimmanenter Vorteil ist dabei die geringe Störempfindlichkeit dieser Systeme, weil sie eine, im Vergleich zu ungesättigten UV-Systemen veringerte Reaktivität gegen die weiteren Bestandteile der Gesamtrezeptur aufweisen. Selbstverständlich ist aber die (Mit-)verwendung ungesättigter Stoffe deshalb nicht ausgeschlossen und im Einzelfall eine Optimierungsaufgabe. H-Donor-Gruppen sind dem Fachmann der Fotochemie bekannt. Es sind prinzipiell Gruppen, die Wasserstoffe mit einer geringen Bindungsenergie aufweisen, besonders Gruppen mit Wasserstoffatomen einer Bindungsenergie von unter 397 kJ/mol.

Angaben zur Bindungsenergie sind literaturbekannt und z. B. zu entnehmen bei Morrison, Robert Thornton Organic Chemistry, Tabelle : Homolytic Bond Dissociation Energies auf der Innenseite des Umschlags, in Library of Congress Cataloging-in-Publication Data ISBNO-205-08453-2, 1987, by Allyn and Bacon, Inc. A Division of Simon & Schuster, Newton, Massachusets, USA.

Beispiele sind Amin-, Furfuryl-, Tetrahydrofurfuryl-, Isobornyl-, Isoalkyl verbindungen und Verbindungen die Gruppen der folgenden Strukturen aufweisen:

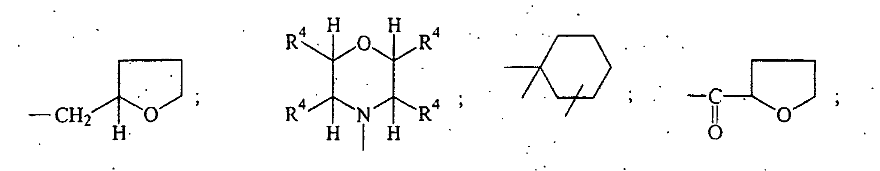

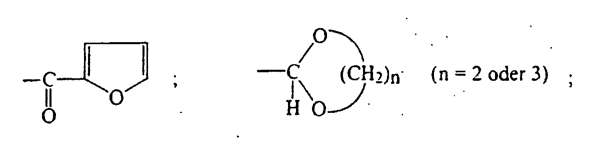

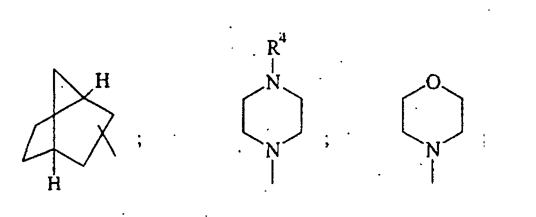

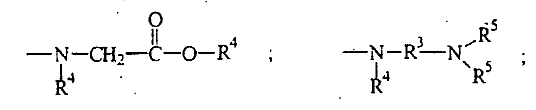

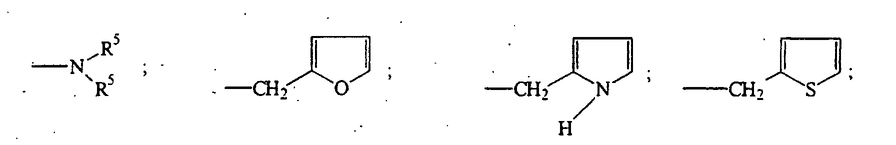

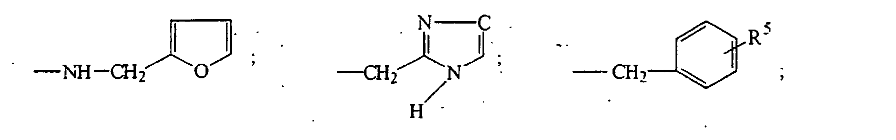

Diese Formeln sind beispielhaft und nicht einschränkend.

Bevorzugt sind solche Gruppen, die als leicht abstrahierbare H-Atome H-Atome in α-Stellung zu einer Doppelbindung (allylständige H-Atome) aufweisen. Besonders bevorzugt als RGb sind Gruppen

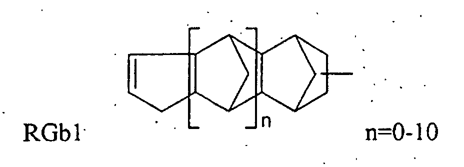

Wege zum Einbau solcher Strukturen sind z. B. die Mitverwendung der Ester des (Oligo-)-dihydrodicyclopentadienols.

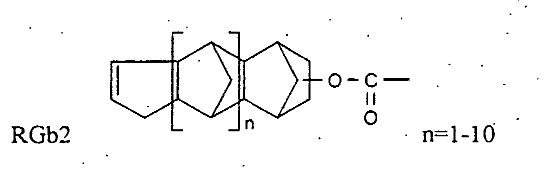

Technisch aus Maleinsäure und DCPD leicht zugänglich sind die Maleinat/Fumarathalbester des (Oligo-)dihydrodicyclopentadienols.

Diese Halbester sind in einer glatten Reaktion aus Maleinsäureanhydrid (MSA), Wasser und Dicyclopentadien (DCPD) bzw. durch eine direkte Addition von DCPD an MSA erhältlich. Weiter ist es möglich, DCPD direkt an andere Säuren und/oder saure Polyester zu addieren. Diese Reaktionen verlaufen aber meist schlechter und bedürfen der Katalyse z. B. mit BF₃-Etherat.

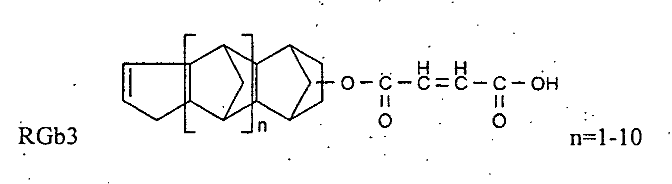

Weiter ist es z. B. aus US-A-252,682 bekannt, daß bei der Reaktion von DCPD und MSA Nebenreaktionen gemäß dem folgenden Formelschema untergeordnet stattfinden können. Diese Nebenprodukte dienen ebenfalls der Einführung von Strukturen gemäß der allgemeinen Formel RGb1.

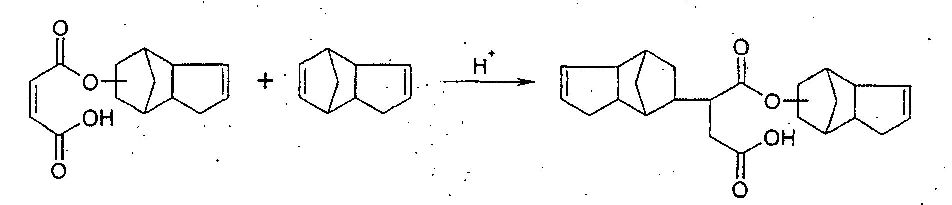

Weiter sind Dihydrodicyclopentadienol und Dihydrodicyclopentadienolacrylat kommerziell verfügbar und zur Einführung der besonders bevorzugten RGb-Strukturen geeignet.

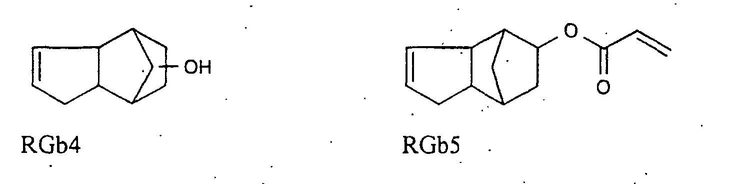

Hydroxyfunktionelle Verbindungen zur Einführung von Gruppen gemäß der allgemeinen Formel RGb1 sind Dihydrodicyclopentadienylalkohol und bevorzugt die kostengünstig unter saurer Katalyse zugänglichen Addukte aus DCPD an Glykole gemäß dem untenstehenden Formelschema

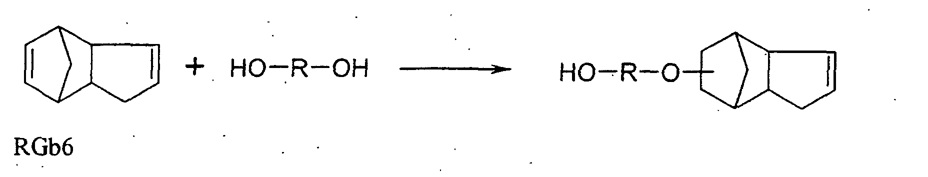

Weiter sind als RGb Endomethylentetrahydrophthalsäurestrukturen von Interesse, die z. B. allgemein durch Anlagerung von CPD an die Maleatgruppen zugänglich sind.

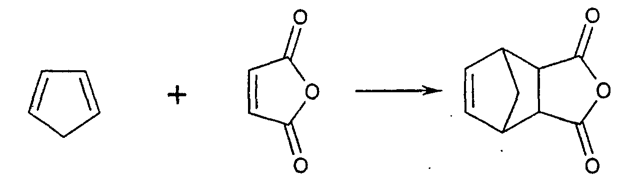

Von besonderem Interesse ist die Einführung von Endomethylentetrahydrophthalsäurestrukturen durch Anlagerung von CPD an die Doppelbindungen ungesättigter Polyester.

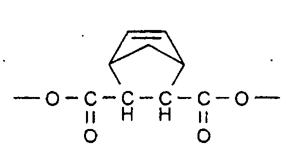

Weiter von Interesse ist die Einführung von Endomethylentetrahydrophthalsäureund Tetrahydrophthalsäurestrukturen über die Imide dieser Säuren mit Hydroxyalkylaminen wie sie z. B. aus DE-A-15700273 oder DE-A-17200323 bekannt sind.

Die oligomere und/oder polymere Grundstruktur der Polymeren IIa umfaßt die bekannten Polymeren wie sie z. B. aufgebaut werden durch -C-C-Verknüpfungen, die auch Doppel- und/oder Dreifachbindungen aufweisen können, sowie durch Ether-, Ester-, Urethan-, Amid-, Imid-, Imidazol-, Keton-, Sulfid-, Sulfon-, Acetal-, Harnstoff-, Carbonat- und Siloxanverknüpfungen unter der Maßgabe der im vorstehen den näher definierten Funktionalisierungen.

Bevorzugt werden Polyester, Polyether, Polyurethane und besonders bevorzugt Polyacrylate eingesetzt.

Polyester im Sinne der Erfindung sind gesättigte und ungesättigte Polyesterharze

Zum Aufbau der Polyesterharze kommen dabei die üblichen und bekannten Carbonsäuren mit ≥ 2 Carboxylgruppen und/oder deren Anhydride und/oder deren Ester und Hydroxylverbindungen mit ≥ 2 OH-Gruppen in Frage. Es können auch monofunktionelle Verbindungen mitverwenden werden, um z. B. das Molekulargewicht der Polykondensate zu regulieren.

Als Carbonsäurekomponenten kommen z. B. α,β-ethylenisch ungesättigte Carbonsäuren, wie Maleinsäure, Maleinsäureanhydrid, Fumarsäure, Itaconsäure, Citraconsäure, gesättigte aliphatische Carbonsäuren bzw. deren Anhydride, wie Bernsteinsäure, Adipinsäure, Korksäure, Sebacinsäure, Azelainsäure, natürliche Fettsäuren und polymerisierte natürliche Fettsäuren, wie Leinölfettsäure, Dimerund Polymerleinölfettsäure, Rizinusöl, Rizinusölfettsäure, gesättigte cycloaliphatische Carbonsäuren bzw. deren Anhydride, wie Tetrahydrophthalsäure, Hexahydrophthalsäure, Endomethylentetrahydrophthalsäure, Norbonendicarbonsäure, aromatische Carbonsäuren bzw. deren Anhydride, wie Phthalsäure in ihren Isomerformen, auch Tri- und Tetracarbonsäuren bzw. deren Andydride, wie Trimellithsäure, Pyromellithsäure, mit Allylalkohol teilveresterte Polycarbonsäuren, z. B. Trimellithsäuremonoallylester oder Pyromellithsäurediallylester in Frage, wobei Benzophenoncarbonsäuren von besonderer Bedeutung sind, weil über diese Copolymer UV-Licht-anregbare Strukturen eingebaut werden können.

Als Hydroxylkomponenten kommen z. B. ggf. alkoxylierte, mindestens zweiwertige aliphatische und/oder cycloaliphatische Alkohole wie Ethylenglykol, Propylenglykol, Polyethylenglykole, Polypropylenglykole, Butandiolisomere, Hexandiol, Trimethylolpropan, Pentaerythrit, Neopentylglykol, Cyclohexandimethanol, Bisphenol A, hydriertes Bisphenol A, OH-polyfunktionelle Polymere, wie hydroxylgruppenmodifizierte Polybutadiene oder hydroxylgruppentragende Polyurethanprepolymere, Glycerin, Mono- und Diglyceride von gesättigten und ungesättigten Fettsäuren, insbesondere Monoglyceride von Leinöl oder Sonnenblumenöl in Frage. Des weiteren kommen auch ungesättigte Alkohole in Frage, wie mit Allylalkohol (teil-)veretherte polyfunktionelle Hydroxylverbindungen, z. B. Trimethylolethanmonoallylether, Trimethylolethandiallylether, Trimethylolpropan-monoallylether, Trimethylolpropandiallylether, Pentaerythritmonoallylether, Pentaerythritdiallylether, Buten-2-diol-1,4 und alkoxyliertes Buten-2-diol-1,4.

Wenn zur Regulation des Molekulargewichtes monofunktionelle Stoffe eingesetzt werden, sind dies bevorzugt monofunktionelle Alkohole, wie Ethanol, Propanol, Butanol, Hexanol, Decanol, Isodecanol, Cyclohexanol, Benzylalkohol oder Allylalkohol. Unter den Begriff Polyester im Sinne der vorliegenden Erfindung fallen auch Polykondensate, die neben den Estergruppen Amid- und/oder Imidgruppen aufweisen, wie sie durch Mitverwendung von Aminoverbindungen erhalten werden. Solcherart modifizierte Polyester sind z. B. durch die DE-A-15700273 und DE-A-17200323 bekannt. Werden dabei Endomethylentetrahydrophthalsäure- und Tetrahydrophthalsäurestrukturen, über die Imide dieser Säuren mit Hydroxyalkyaminen wie sie dort genannt sind, eingeführt so sind das RGb im Sinne dieser Erfindung.

An die Doppelbindungen der verwendeten ungesättigten Polyester kann auch DCPD angelagert werden, wodurch es ermöglicht wird, Endomethylentetrahydrophthalsäurestrukturen einzubauen, die RGb im Sinne dieser Erfindung darstellen. Diese Endomethylentetrahydrophthalsäurestrukturen können dabei an den kettenständigen Doppelbindungen der Polyester und/oder an terminalen Doppelbindungen, wie sie z. B. über Stoffe gemäß der allgemeinen Formel 3 eingeführt werden, vorhanden sein. Die Doppelbindungen aus den ungesättigten Dicarbonsäuren und/oder ungesättigten Diolen sind kettenständige RGb im Sinne der Erfindung. Das Einführen der RG kann durch Cokondensation und/oder durch polymeranaloge Umsetzungen an Polyestern mit funktionellen Gruppen erfolgen. Beispiele für Cokondensationen sind die Mitverwendung von Trimethylolpropandi- und -monoallylether, Pentaerythritdi- und -monoallylether, Buten-2-diol-1,4, alkoxyliertes Buten-2-diol-1,4, Allylalkohol und Verbindungen laut Formeln 3, 4, 5, 7, 8.

Bevorzugt zur Einführung von RGa ist die Cokondensation von Benzophenoncarbonsäuren oder deren Anhydriden. Weiter bevorzugt ist die Addition der Reaktionsprodukte von Hydroxybenzophenonen mit einem Überschuß an Diisocyanaten mit hydroxyfunktionellen Polyestern.

Auf diese Weise lassen sich auch RGb in hydroxyfunktionelle Polyester einführen. Dazu werden zunächst bevorzugt Diisocyanate mit Isocyanatgruppen unterschiedlicher Reaktivität, z. B. Isophorondiisocyanat oder 1,4-Toluylendiisocanat, mit einer halbäquivalenten Menge von z. B. Hydroxyacrylaten, Hydroxyvinylethern, Hydroxyallylestern, Hydroxyallylethern, Hydroxy-DCPD-Verbindungen laut Formeln AGb4 und AGb6 umgesetzt und diese Umsetzungsprodukte dann mit den hydroxyfunktionellen Polyestern zur Reaktion gebracht. Bei den genannten Reaktionen können auch gleichzeitig hydroxylfunktionelle Stoffe unterschiedlicher Art eingesetzt werden.

Poly(meth)acrylatharze, die erfindungsgemäß mit RG funktionalisiert sind, stellen eine weitere wichtige erfindungsgemäße Polymerklasse dar und werden durch Copolymerisation von Acrylestern, ggf. mit weiteren copolymerisierbaren Verbindungen, erhalten.

Die erfindungsgemäßen Poly(meth)acrylatharze können aber auch in Lösungsmitteln hergestellt werden. Eine weitere vorteilhafte Methode zur Herstellung von Poly(meth)acrylaten ist die lösungsmittelfreie, radikalische Substanzpolymerisation im gerührten Reaktor, ggf. unter Druck oder in kontinuierlichen Durchlaufreaktoren bei Temperaturen oberhalb der Schmelztemperatur der gebildeten Polymeren.

Als Komponenten zum Aufbau von Poly(meth)acrylatharzen sind beispielsweise die bekannten Ester der Acrylsäure und Methacrylsäure mit. aliphatischen, cycloaliphatischen, araliphatischen und aromatischen Alkoholen mit 1 bis 40 Kohlenstoffatomen geeignet, wie z. B. Methyl(meth)acrylat, Ethyl(meth)acrylat, Propyl(meth)acrylat, Isopropyl(meth)acrylat, n-Butyl(meth)acrylat, Isobutyl(meth)acrylat, tert.-Butyl(meth)acrylat, Amyl(meth)acrylat, Isoamyl-(meth)acrylat, Hexyl(meth)acrylat, 2-Ethylhexyl(meth)acrylat, Decyl(meth)acrylat, Undecyl(meth)acrylat, Dodecyl(meth)acrylat, Tridecyl(meth)acrylat, Cyclohexyl(meth)-acrylat, Methylcyclohexyl(meth)acrylat, Benzyl(meth)acrylat, Tetrahydrofurfuryl(meth)acrylat, Furfuryl(meth)acrylat und die Ester der 3-Phenylacrylsäure und deren verschiedenen Isomcrieformen, wie Methylcinnamat, Ethylcinnamat, Butylcinnamat, Benzylcinnamat, Cyclo-hexylcinnamat, Isoamylcinnamat, Tetrahydrofurfurylcinnamat, Furfurylcinnamat, Acrylamid, Methacrylamid, Methylolacrylamid, Methylolmethacrylamid, Acrylsäure, Methacrylsäure, 3-Phenylacrylsäure, Hydroxyalkyl(meth)acrylate, wie Ethylglykolmono(meth)acrylat, Butylglykolmono(meth)acrylate, Hexandiolmono(meth)acrylat, Glycolether(meth)acrylate, wie Methoxyethylglykolmono(meth)acrylat, Ethyloxyethylglykolmono(meth)-acrylat, Butyloxyethylglykolmono(meth)acrylat, Phenyloxyethylglykolmono(meth)acrylat, Glycidylacrylat, Glycidylmethacrylat, Amino(meth)acrylate, wie 2-Aminoethyl-(meth)acrylat.

Als weitere Komponenten kommen radikalisch copolymerisierbare Monomere, wie Styrol, 1-Methylstyrol, 4-tert.Butylstyrol, 2-Chlorstyrol, Vinylester von Fettsäuren mit 2 bis 20 Kohenstoffstomen, wie Vinylacetat, Vinylpropionat, Vinylether von Alkanolen mit 2 bis 20 Kohlenstoffatomen, wie Vinylisobutylether, Vinylchlorid, Vinylidenchlorid, Vinylalkylketone, Diene, wie Butadien und Isopren sowie Ester der Malein- und Crotonsäure in Frage. Geeignete Monomere sind auch cyclische Vinylverbindungen, wie Vinylpyridin, 2-Methyl-1-Vinylimidazol, 1-Vinylimidazol, 5-Vinylpyrrolidon und N-Vinylpyrrolidon. Auch allylisch ungesättigte Monomere können eingesetzt werden, wie z. B. Allylalkohol, Allylalkylester, Monoallylphthalat und Allylphthalat. Auch Acrolein und Methacrolein und polymerisierbare Isocyanate kommen in Frage.

Der Einbau der RG kann durch Copolymerisation bei der Herstellung der Polyacrylate oder durch anschließende polymeranaloge Umsetzung erfolgen. Gut polymerisierbare Verbindungen, die Gruppen RGb aufweisen sind z. B. Dihydrodicyclopentadienol(meth)acrylat, Dihydrodicyclopentadienylethacrylat und Dihydrodicyclopentadienylcinnamat. Gut polymerisierbare Verbindungen, die weitere Gruppen aufweisen an denen eine polymeranaloge Funktionalisierung möglich ist, sind z. B. copolymerisierbare Epoxidverbindungen, wie Glycidyl(meth)acrylat oder Hydroxyalkyl(meth)acrylate. Die so eingebauten Hydroxyl- und/oder Epoxidgruppen sind Anker-Gruppen für polymeranaloge Funktionalisierungsreaktionen der Polymeren. Epoxydgruppen sind z. B. zur Einführung von acrylischen Doppelbindungen durch Umsetzung mit (Meth)acrylsäure (RGb) und/oder zur Einführung von Vinylethergruppen (RGb) durch Umsetzung mit Aminovinyletherverbindungen, wie z. B. Diethanolamindivinylether oder zur Einführung von Benzophenongruppen (RGa) durch Umsetzung mit Hydroxy- und/oder Aminobenzophenonen geeignet.

Polyurethane, die erfindungsgemäß mit RG funktionalisiert sind, stellen eine weitere wichtige erfindungsgemäße Polymerklasse dar und werden durch auf dem Fachmann bekannte Weise aus polyfunktionellen, meist difunktionellen Isocyanaten und Polyhydroxy- und/oder Polyaminoverbindungen erhalten. Auch dabei ist es möglich RGa und/oder RGb direkt beim Aufbau der Polyurethane mit einzubauen oder in funktionelle Polyurethane nachträglich einzuführen. Die chemischen Reaktionspartner sind dabei im Wesentlichen die gleichen wie bei den vorherig beschriebenen Polymeren. Bevorzugt werden RGa über die Mitverwendung von funktionellen Benzophenonverbindungen und RGb über Hydroxy-DCPD-Verbindungen laut Formeln RGb4 und RGb6 eingeführt.

Weitere Details bzgl. der verwendbaren Polyurethan-Grundkörper sind der entsprechenden Diskussion der als Polymer IIb verwendbaren Polyurethane zu entnehmen.

Die Herstellung erfindungsgemäßer Polymer IIa erfolgt nach allgemein bekannten Regeln und ist dem Polymerfachmann bekannt, was z. B. die Einstellung eines erwünschten Molekulargewichtes durch die Mitverwendung von regelnden oder monofunktionellen Einsatzstoffe oder die Einstellung einer gewünschten Glasübergangstemperatur durch Balancierung von hart/weich Komponenten betrifft.

Verbindungen mit besonderer Eignung zur Einführung von RGa in erfindungsgemäß verwendelen Polymeren IIa, besonders in, wie im vorherigen beschriebene, epoxid- und/oder hxdroxyfunktionalisierte Polyester, Polyurthane oder Polyacrylate sind:
2-, 3- und 4-Hydroxybenzophenon, 2-Hydroxy-5-methylhydroxybenzophenon,
2-Hydroxy-4-methoxybenzophenon, 2-Hydroxy-4-octyloxybenzophenon, 2-Hydroxy-4-dodecyloxybenzophenon, 2-Hydroxy-5-chlorohydroxybenzophenon, 2-Hydroxy-4-methoxy-4'-methylbenzophenon, 2-Hydroxy-4-methoxy-4'-chlorobenzophenon,
4-Hydroxy-3-methylbenzophenon, 4-Hydroxy-4'-methoxybenzophenon, 4-Hydroxy-4'-chlorobenzophenon, 4-Hydroxy-4'-fluorobenzophenon, 4-Hydroxy-4'-cyanobenzophenon, 4-Hydroxy-2',4'-dimethoxybenzophenon, 2,2',4,4'- und 2,4-Dihydroxybenzophenon, 4-tert.-Butyl-2,4-dihydroxybenzophenon, 2,2'-Dihydroxy-4-methoxy-benzophenon, 2,2'-Dihydroxy-4-octoxybenzophenon, 2,2'-Dihydroxy-4,4'-dimethoxy-benzophenon, 2,4,4'-, 2,3,4- und 2,4,6-Trihydroxybenzophenon, 2,2,'-, 4,4'-, 2,3,4,4'- und 2,3',4,4'-Tetrahydroxybenzophenon, 2-, 3- und 4-Amino-benzophenon, 2-Amino-4-methylbenzophenon, 2-Amino-6-methylbenzophenon, 2-Amino-4'-methylbenzophenon, 2-Amino-4'-chloro-5-fluorobenzophenon, 2-Amino-5-chlorobenzophenon, 2-Amino-5-bromobenzophenon, 2-Amino-5-methylbenzophenon, 2-Amino-N-ethylbenzophenon, 2-Amino-2',5'-dimethylbenzophenon, 4-Amino-2-chlorobenzophenon, 4-Amino-4'-methoxybenzophenon, 3,4-, 4,4'- und 3,3'-Diaminobenzophenon, 4,4'-Bis(methylamino)benzophenon, 3,3',4,4'-Tetraaminobenzophenon, 2-, 3- und 4-Benzoylbenzoesäure, 2-Benzoyl-3'methylbenzoesäure, 2-Benzoyl-4'-Ethylbenzoesäure, 2-Benzoyl-3,6-dimethylbenzoesäure; 2-Benzoyl-2',6'-dimethylbenzoesäure, 2-Benzoyl-3',4'dimethylbenzoesäure, 2-Benzoyl-2',4',6-dimethylbenzoesäure, 2-Benzoyl-phydroxybenzoesäure, 2-Benzoyl-4'-methyl-3'-chlorobenzoesäure, 2-Benzoyl-6-chlorobenzoesäure, 4-Benzoyl-4'-isopropylbenzoesäure, 4-Benzoyl-4'chlorobenzoesäure, 4-Benzoyl-4'-(2-carboxypropyl)benzoesäure, 2,4-, 3,4- und 4,4'-Benzophenondicarbonsäure, 2',3,4-, 3,3',4- und 3,4,4'-Benzophenontricarbonsäure, 3,3',4,4'-Benzophenontetracarbonsäure und -tetracarbonsäuredianhydrid, 2-Hydroxy-4-methoxy-5-sulfobenzophenon, 4-(4-Carboxyphenyloxy)benzophenon, 4-(3,4-Bis(carboxy)-phenyloxy)benzophenon und das entsprechende Anhydrid, 4'-(4-Carboxyphenyloxy)-benzophenon-4-carbonsäure, 4'-(4-Carboxyphenyloxy)-benzophenon-3,4-dicarbonsäure und das entsprechende Anhydrid, 4'-(3,4-Bis(carboxy)-phenyloxy)-benzophenon-2,4- und -3,4-dicarbonsäure und die entsprechenden Anhydride, 4-(4-Cyanobenzoyl)-thiophenol, 4-(2-Hydroxyethoxy)phenyl-(2-hydroxy-2-propyl)keton, 4-(2-Aminoethoxy)phenyl-(2-hydroxy-2-propyl)keton, 4-(2-Hydroxycarbonylmethoxy)phenyl-(2-hydroxy-2-propyl)keton, 4-(2-Isocyanatoethoxy)phenyl-(2-hydroxy-2-propyl)keton, 4-(2-Isocyanatomethoxy)phenyl-(2-hydroxy-2-propyl)keton, 2-([2-]6-Isocyanatohexylaminocar-bonyloxy)ethoxylthioxanthon, Phenylglyoxylsäure.

Ferner können auch die nachfolgend unter "Polymere IIb" diskutierten Polymere und Copolymere als Polymere IIa verwendet werden, sofern sie mit Reaktionsgruppen RG, insbesondere RGa und/oder RGb versehen werden. Insbesondere sind hierbei mit Reaktionsgruppen RG versehene Polymere und Copolymere halogenhaltiger olefinischer Verbindungen (Gruppe 4f)) zu nennen.

Die Vernetzung der erfindungsgemäß verwendeten Polymere IIa erfolgt bevorzugt durch energiereiche Strahlung, insbesondere durch UV-Licht. Dabei ist in den meisten Fällen kein weiterer Fotoinitiatorzusatz notwendig, d. h. die Stoffe sind selbst fotovernetzend wobei ein besonderer Vorteil ihre geringe Inhibierung durch Luft ist. Es ist aber nicht ausgeschlossen weitere handelübliche Fotoinitiatoren zuzusetzen. Weiter sind viele Polymere IIa auch thermisch vernetzbar. Besonders hohe thermische Vernetzbarkeit ist in Gegenwart von Peroxyden und/oder C-Clabilen Stoffen vom Typ der Benzpinakole bei ungesättigten Systemen, die zusätzlich DCPD-Gruppen aufweisen gegeben. Solche Systeme sind z. T. auch ohne Peroxide thermisch härtbar. Eine bevorzugte schnelle Vernetzung wird erreicht durch bgkombinierte Anwendung von Wärme und UV-Licht, z. B. durch Kombination von IR- und UV-Quellen.

Als Polymere IIb werden thermoplastische und ionenleitende Polymere eingesetzt. Insbesondere zu nennen sind:
1) Polycarbonate, wie z. B. Polyethylencarbonat, Polypropylencarbonat, Polybutadiencarbonat, Polyvinylidencarbonat.
2) Homo-, Block- und Copolymere, hergestellt aus
   a) olefinischen Kohlenwasserstoffen, wie z. B. Ethylen, Propylen, Butylen, Isobuten, Propen, Hexen oder höhere Homologen, Butadien, Cyclopenten, Cyclohexen, Norbornen, Vinylcyclohexan, 1,3-Pentadien, 1,3-, 1,4-, 1,5-Hexadien, Isopren, Vinylnorbonen;
   b) aromatische Kohlenwasserstoffe wie z. B. Styrol und Methylstyrol;
   c) Acrylsäure- oder Methacrylsäureester, wie Methyl-, Ethyl-, Propyl-, Isopropyl-, Butyl-, Isobutyl-, Hexyl-, Octyl-, Decyl-, Dodecyl-, 2-Ethylhexyl, Cyclohexyl-, Benzyl-, Trifluoromethyl-, Hexafluoropropyl-, Tetrafluoropropylacrylat bzw. -methacrylat;
   d) Acrylnitril, Methacrylnitril, N-Methylpyrrolidon, N-Vinylimidazol, Vinylacetat;
   e) Vinylether, wie z. B. Methyl-, Ethyl-, Propyl-, Isopropyl-, Butyl-, Isobutyl-, Hexyl-, Octyl-, Decyl-, Dodecyl-, 2-Ethylhexyl, Cyclohexyl, Benzyl-, Trifluoromethyl-, Hexafluoropropyl-, Tetrafluoropropyl-vinylether;
   (f) Polymere und Copolymere halogenhaltiger olefinischer Verbindungen, wie z. B. Vinylidenfluorid, Vinylidenchlorid, Vinylfluorid, Vinylchlorid, Hexafluorpropen, Trifluorpropen, 1,2-Dichlorethylen, 1,2-Difluorethylen und Tetrafluorethylen; vorzugsweise Polymere oder Copolymere des Vinylchlorids, Acrylnitrils, Vinylidenfluorids; Copolymere aus Vinylchlorid und Vinylidenchlorid, Vinylchlorid und Acrylonitril, Vinylidenfluorid und Hexafluroporpylen, Vinylidenfluorid mit Hexafluoropropylen; Terpolymere aus Vinylidenfluorid und Hexafluorpropylen sowie einem Mitglied der Gruppe bestehend aus Vinylfluorid, Tetrafluorethylen und Trifluorethylen; insbesondere ein Copolymer aus Vinylidenfluorid und Hexafluorpropylen; und weiter bevorzugt ein Copolymer umfassend 75 bis 92 Gew.- % Vinylidenfluorid und 8 bis 25 Hexafluoropropylen.
   g) 2-Vinylpyridin, 4-Vinylpyridin, Vinylencarbonat.
   Bei der Herstellung der oben genannten Polymere können, falls dies nötig und/oder erwünscht ist, Regler, wie z. B. Mercaptane eingesetzt werden.
3) Polyurethane, beispielsweise erhältlich durch Umsetzung von
   a) organischen Diisocyanaten mit 6 bis 30 C-Atomen wie z. B. aliphatische nichtcyclische Diisocyanate, wie z. B. 1,5-Hexamethylendiisocyanat und 1,6-Hexamethylendiisocyanat, aliphatische cyclische Diisocyanate, wie z. B. 1,4-Cyclohexylendiisocyanat, Dicyclohexylmethandiisocyanat und Isophorondiisocyanat oder aromatische Diisocyanate, wie z. B. Toluylen-2,4-diisocyanat, Toluylen-2,6-diisocyanat, m-Tetramethylxyloldiisocyanat, p-Tetramethylxyloldiisocyanat, 1,5-Tetrahydronaphthylendiisocyanat und 4,4'-Diphenylenmethandiisocyanat oder Gemische solcher Verbindungen,
      mit
   b) mehrwertigen Alkoholen, wie z. B. Polyesterole, Polyetherole und Diole.
      Die Polyesterole sind zweckmäßigerweise überwiegend lineare Polymere mit endständigen OH-Gruppen, bevorzugt solche mit zwei oder drei, insbesondere zwei OH-Endgruppen. Die Säurezahl der Polyesterole ist kleiner als 10 und vorzugsweise kleiner als 3. Die Polyesterole lassen sich in einfacher Weise durch Veresterung von aliphatischen oder aromatischen Dicarbonsäuren mit 4 bis 15 C-Atomen, vorzugsweise 4 bis 6 C-Atomen, mit Glycolen, bevorzugt Glycolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure und Bernsteinsäure einsetzen. Geeignete aromatische Dicarbonsäuren sind Terephthalsäure, Isophthalsäure, Phthalsäure oder Gemische aus diesen Dicarbonsäuren mit anderen Dicarbonsäuren, z. B. Diphensäure, Sebacinsäure, Bernsteinsäure und Adipinsäure. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Beispiele für geeignete Glycole sind Diethylenglycol, 1,5-Pentandiol, 1,10-Decandiol und 2,2,4-Trimethylpentandiol-1,5. Vorzugsweise verwendet werden 1,2-Ethandiol, 1,3-Propandiol, 2-Methyl-1,3-propandiol,1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A). Je nach den gewünschten Eigenschaften der Polyurethane können die Polyole alleine oder als Gemisch in verschiedenen Mengenverhältnissen verwendet werden. Als Lactone für die Herstellung der Polyesterole eignen sich z. B. α,α-Dimethyl-β-propiolacton, γ-Butyrolacton und vorzugsweise ε-Caprolacton.
      Die Polyetherole sind im wesentlichen lineare, endständige Hydroxylgruppen aufweisende Substanzen, die Etherbindungen enthalten. Geeignete Polyetherole können leicht durch Polymerisation von cyclischen Ethern, wie Tetrahydrofuran, oder durch Umsetzung von einem oder mehreren Alkylenoxiden mit 2 bis 4. C-Atomen im Alkylenrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2-Butylenoxid, 2,3-Butylenoxid genannt. Die Alkylenoxide können einzeln, alternierend nacheinander oder als Mischung verwendet werden. Als Startermolekül kommen beispielsweise Wasser, Glycole wie Ethylenglycol, Propylenglycol, 1,4-Butandiol und 1,6-Hexandiol, Amine wie Ethylendiamin, Hexamethylendiamin und 4,4'-Diamino-diphenylmethan und Aminoalkohole wie Ethanolamin in Betracht. Geeignete Polyesterole und Polyetherole sowie deren Herstellung sind beispielsweise in EP-B 416 386, geeignete Polycarbonatdiole, vorzugsweise solche auf 1,6-Hexandiol-Basis, sowie deren Herstellung beispielsweise in US-A 4 131 731 beschrieben.
      In Mengen bis zu 30 Gew.-% bezogen auf Gesamtmasse der Alkohole können vorteilhaft aliphatische Diole mit 2 bis 20, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2,2-Dimethyl-1,3-propandiol, 2-Methyl-2-butyl-1,3-propandiol, 2,2-Dimethyl-1,4-butandiol, 1,4-Dimethylolcyclohexan, Hydroxypivalinsäureneopentylglycolester, Diethylenglycol, Triethylenglycol und Methyldiethanolamin oder aromatisch-aliphatische oder aromatisch-cycloaliphatische Diole mit 8 bis 30 C-Atomen eingesetzt werden, wobei als aromatische Strukturen heterocyclische Ringsysteme oder vorzugsweise isocyclische Ringsysteme wie Naphthalin- oder insbesondere Benzolderivate wie Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate sowie Mischungen solcher Verbindungen in Betracht kommen.
      In Mengen bis zu 5 Gew.-%, bezogen auf Gesamtmasse der Alkohole, können vorteilhaft aliphatische Triole mit 3 bis 15, vorzugsweise 3 bis 10 C-Atomen, wie Trimethylolpropan oder Glycerin, das Reaktionsprodukt solcher Verbindungen mit Ethylenoxid und/oder Propylenoxid sowie Mischungen solcher Verbindungen in Betracht kommen.
      Die mehrwertigen Alkohole können funktionelle Gruppen, beispielsweise neutrale Gruppen wie Siloxangruppen, basische Gruppen wie insbesondere tertiäre Aminogruppen oder saure Gruppen oder deren Salze oder Gruppen, die leicht in saure Gruppen übergehen, tragen, die über einen mehrwertigen Alkohol eingeführt werden. Vorzugsweise kann man Diolkomponenten, die solche Gruppen tragen, wie N-Methyldiethanolamin, N,N-Bis(hydroxyethyl)aminomethylphosphonsäurediethylester oder N,N-Bis(hydroxyethyl)-2-aminoessigsäure-(3-sulfopropyl)-ester oder Dicarbonsäuren, die solche Gruppen tragen und für die Herstellung von Polyesterolen verwendet werden können, wie 5-Sulfoisophthalsäure, verwenden.
      Saure Gruppen sind besonders die Phosphorsäure-, Phosphonsäure-, Schwefelsäure-, Sulfonsäure-, Carboxyl-, oder Ammoniumgruppe.
      Gruppen, die leicht in saure Gruppen übergehen, sind beispielsweise die Estergruppe oder Salze, vorzugsweise der Alkalimetalle wie Lithium, Natrium oder Kalium.
4) Die oben beschriebenen Polyesterole an sich, wobei dabei zu beachten ist, daß man Molekulargewichte im Bereich von 10.000 bis 2.000.000, vorzugsweise 50.000 bis 1.000.000 erhält.
5) Polyamine, Polysiloxane und Polyphosphazene, insbesondere solche, wie sich bei der Beschreibung des Polymers IIb2 bereits diskutiert wurden.
6) Polyetherole, wie sie z. B. bei der obigen Diskussion des Polymers IIb1 als Verbindung (c) oder bei der Diskussion der Polyurethane beschrieben wurden.

Es können selbstverständlich auch Gemische der obigen Polymere IIb eingesetzt werden. Die erfindungsgemäß eingesetzten Copolymere IIb können je nach Herstellungsart die Monomeren statistisch verteilt enthalten, oder als Blockcopolymere vorliegen.

Die Polymere IIa und IIb werden nach herkömmlicher, dem Fachmann wohl bekannter Art polymerisiert, vorzugsweise radikalisch polymerisiert. Die Polymere IIa und IIb können sowohl hochmolekular oder oligomer oder als Gemische davon eingesetzt werden.

Die Anteile des Polymers IIa am polymeren Bindemittel II beträgt im allgemeinen 1 bis 100 Gew.-%, vorzugsweise 20 bis 80 Gew.-%, weiter bevorzugt 30 bis 60 Gew.-%. Entsprechend beträgt der Anteil des Polymers IIb am polymeren Bindemittel II im allgemeinen 0 bis 99 Gew.-%, vorzugsweise 20 bis 80 Gew.-% und weiter bevorzugt 40 bis 70 Gew.-%.

Vorzugsweise betrifft die vorliegende Erfindung Verbundkörper mit einer ersten Schicht, die folgende Zusammensetzungen umfaßt:

Zusammensetzungen wie oben definiert, wobei das Polymer IIa ketten-, endund/oder seitenständig mindestens eine Reaktivgruppe RGa aufweist, die thermisch und/oder unter UV-Strahlung im Triplett angeregten Zustand zur Wasserstoffabstraktion befähigt ist, und ketten-, end- und/oder seitenständig mindestens eine von RGa verschiedene, mit RGa coreaktive Gruppe RGb aufweist, wobei im Durchschnitt aller Polymermoleküle mindestens je eine Gruppe RGa und eine Gruppe RGb vorhanden ist.

Zusammensetzungen wie oben definiert, wobei das Polymer IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist.

Zusammensetzungen wie oben definiert, wobei das Polymer IIb ausgewählt wird aus der Gruppe bestehend aus einem Polymer oder Copolymer des Vinylchlorids, Acrylnitrils, Vinylidenfluorids; einem Copolymer aus Vinylchlorid und Vinylidenchlorid, Vinylchlorid und Acrylonitril, Vinylidenfluorid und Hexafluoropropylen, Vinylidenfluorid mit Hexafluoropropylen; einem Terpolymer aus Vinylidenfluorid und Hexafluorpropylen sowie einem Mitglied der Gruppe bestehend aus Vinylfluorid, Tetrafluorethylen und Trifluorethylen.

Zusammensetzungen wie oben definiert, wobei das Polymer IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist, und das Polymer IIb ein Copolymer aus Vinylidenfluorid und Hexafluorpropylen ist.

Die erfindungsgemäß verwendeten Zusammensetzungen können ferner einen Weichmacher III enthalten. Es kann jedoch auch ohne Weichmacher gearbeitet werden.

Sofern vorhanden, beträgt der Anteil des Weichmachers III, bezogen auf die Zusammensetzung, 0,1 bis 100 Gew.-%, vorzugsweise 0,5 bis 50 Gew.-% und insbesondere 1 bis 20 Gew.-%.

Als Weichmacher III können z. B. die in der DE-A 198 19 752 beschriebenen Weichmacher verwendet werden, wobei Dimethylcarbonat, Diethylcarbonat, Dipropylcarbonat, Ethylencarbonat, 1,2-Propylencarbonat, 1,3-Propylencarbonat, organische Phosphorverbindungen, insbesondere Phosphate und Phosphonate, wie z. B. Trimethylphosphat, Triethylphosphat, Tripropylphosphat, Tributylphosphat, Tris(2-ethylhexyl)phosphat, Polyalkylenoxidether und -ester, z. B. Diglyme-, Triglyme- und Tetradlyme-Verbindungen, polymere Weichmacher, wie z. B. thermoplastische Polyurethane oder Polyamide, sowie deren Gemische bevorzugt sind.

Die erfindungsgemäß verwendeten Zusammensetzungen können in einem anorganischen oder organischen, vorzugsweise einem organischen flüssigen Verdünnungsmittel gelöst oder dispergiert werden, wobei die erfindungsgemäße Mischung eine Viskosität von vorzugsweise 100 bis 50.000 mPas aufweisen sollte, und anschließend in an sich bekannter Weise, wie Spritzbeschichtung, Gießen, Tauchen, Spincoaten, Walzenbeschichtung, Bedrucken im Hoch-, Tiefoder Flachdruck oder Siebdruckverfahren, auf ein Trägermaterial aufgetragen werden. Die weitere Verarbeitung kann wie üblich erfolgen, z. B. durch Entfernen des Verdünnungsmittels und Aushärten der Mischung.

Als organische Verdünnungsmittel eignen sich aliphatische Ether, insbesondere Tetrahydrofuran und Dioxan, Kohlenwasserstoffe, insbesondere Kohlenwasserstoffgemische wie Benzin, Toluol und Xylol, aliphatische Ester, insbesondere Ethylacetat und Butylacetat und Ketone, insbesondere Aceton, Ethylmethylketon und Cyclohexanon, sowie DMF und NMP. Es können auch Kombinationen solcher Verdünnungsmittel eingesetzt werden.

Als Trägermaterial kommen die üblicherweise für Elektroden verwendeten Materialien, vorzugsweise Metalle wie Aluminium und Kupfer, in Betracht. Ebenso können temporäre Zwischenträger, wie Folien, insbesondere Polyesterfolien, wie Polyethylenterephthalatfolien, verwendet werden. Solche Folien können vorteilhaft mit einer Trennschicht vorzugsweise aus Polysiloxanen versehen sein.

Ebenso kann die Herstellung der Separatoren thermoplastisch beispielsweise durch Spritzgießen, Schmelzgießen, Pressen, Kneten oder Extrudieren gegebenenfalls mit anschließendem Kalandrierschritt der erfindungsgemäß verwendeten Zusammensetzung erfolgen.

Nach der Filmbildung der erfindungsgemäß verwendeten Zusammensetzung können flüchtige Komponenten, wie Lösungsmittel oder Weichmacher, entfernt werden.

Die Vernetzung der erfindungsgemäß verwendeten Zusammensetzung kann in an sich bekannter Weise erfolgen, beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei in üblicher Weise vorteilhaft ein Initiator wie Benzildimethylketal oder 1,3,5-Trimethylbenzoyltriphenylphosphinoxid in Mengen von insbesondere höchstens 1 Gew.-% bezogen auf das Polymer IIa zugegeben werden und die Vernetzung innerhalb von im allgemeinen 0,5 bis 15 Minuten durchgeführt werden kann; durch thermische Vernetzung über radikalische Polymersation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf das Polymer IIa zugeben kann; durch elektrochemisch induzierte Polymerisation; oder durch ionische Polymerisation erfolgen, beispielsweise durch säurekatalysierte kationische Polymerisation, wobei als Katalysator in erster Linie Säuren, vorzugsweise Lewissäuren wie BF₃, oder insbesondere LiBF₄ oder LiPF₆ in Betracht kommen. Lithiumionen enthaltende Katalysatoren wie LiBF₄ oder LiPF₆ können dabei vorteilhaft im Festelektrolyt oder Separator als Leitsalz verbleiben.

Die oben beschriebene Vernetzung kann, muß aber nicht, unter Inertgas erfolgen. Dabei kann erfindungsgemäß die Belichtungszeit so gesteuert werden, daß entweder vollständige Vernetzung erfolgt oder lediglich kurzzeitig mit UV-Licht vorbestrahlt werden, so daß lediglich eine teilweise Vernetzung stattfindet.

Wie eingangs erwähnt umfaßt die mindestens eine zweite Schicht des erfindungsgemäßen Formkörpers einen konventionellen Separator. Dabei werden erfindungsgemäß die folgenden konventionellen Separatoren eingesetzt:
- Separatoren auf der Basis von mikroporösen Polyolefinfolien, wie sie beispielsweise unter den Handelsnamen Celgard®, Hipore® käuflich erhältlich sind und u. a. in der EP-A 0 718 901 sowie der EP-B 0 715 364, die beide vollumfänglich in den Kontext der vorliegenden Anmeldung durch Bezugnahme aufgenommen werden; dabei sind Polyethylen- und Polypropylen-Folien, sowie Folien, die Blends aus Polyethylen bzw. Polypropylen mit weiteren Polymeren enthalten, ebenfalls gut verwendbar;
- mikroporöse Polytetrafluorethylen (PTFE)-Folien der Firma Goretex, wie sie beispielsweise in der EP-A 0 798 791, die ebenfalls durch Bezugnahme in den Kontext der vorliegenden Anmeldung einbezogen wird, beschrieben sind;
- Vliese, Fasern, sowie nicht gewebte Textilverbundstoffe, sogenannte "Nonwovens", die allesamt unter Verwendung von faserförmigen Polymermaterialien, wie z. B. Polyolefin-, Polyamid- und Polyester-Fasern hergestellt werden können;
- Folien, die unter dem Handelsnamen Nafion® erhältlich sind;
- Folien auf der Basis eine Copolymerisats aus Vinylidendifluorid und Hexafluorpropen, wie sie beispielsweise in der US 5 540 741 und der US 5 478 668 beschrieben sind;
- füllstoffhaltige, durch Extrusion erhältliche Homo-, Block- und Copolymere, hergestellt aus
   (a) olefinischen Kohlenwasserstoffen, wie z. B. Ethylen, Propylen, Butylen, Isobuten, Propen, Hexen oder höhere Homologen, Butadien, Cyclopenten, Cyclohexen, Norbornen, Vinylcyclohexan;
   (b) aromatische Kohlenwasserstoffe wie z. B. Styrol und Methylstyrol;
   (c) Acrylsäure- oder Methacrylsäureester, wie Methyl-, Ethyl-, Propyl-, Isopro-pyl-, Butyl-, Isobutyl-, Hexyl-, Octyl-, Decyl-, Dodecyl-, 2-Ethylhexyl, Cyclohexyl-, Benzyl-, Trifluoromethyl-, Hexafluoropropyl-, Tetrafluoropropylacrylat bzw. -methacrylat;
   (d) Acrylnitril, Methacrylnitril, N-Methylpyrrolidon, N-Vinylimidazol, Vinylacetat;
   (e) Vinylether, wie z. B. Methyl-, Ethyl-, Propyl-, Isopropyl-, Butyl-, Isobutyl-, Hexyl-, Octyl,, Decyl-, Dodecyl-, 2-Ethylhexyl, Cyclohexyl, Benzyl-, Trifluoromethyl-, Hexafluoropropyl-, Tetrafluoropropylvinylether;
   (f) halogenhaltigen olefinischen Verbindungen wie Vinylchlorid, Vinylfluorid, Vinylidenfluorid, Vinylidenchlorid, Hexafluoropropen, Trifluoropropen, 1,2-Dichloroethen, 1,2-Difluoroethen, Tetrafluoroethen.
wobei als Füllstoff in diesen Polymeren die erfindungsgemäßen Feststoffe (I) zum Einsatz kommen; derartige Extruderfolien sind in der DE-A 19713072.0 bezüglich ihrer Zusammensetzung und Herstellung detailliert beschrieben.

Zur Herstellung des erfindungsgemäßen Verbundkörpers werden die mindestens eine erste Schicht mit der mindestens einen zweiten Schicht zusammengebracht, wobei erfindungsgemäß alle bekannten Verfahren zum Zusammenbringen derartigen Schichten eingesetzt werden können. So kann das Aufbringen der ersten Schicht auf die zweite Schicht durch drucklose Verfahren, wie z. B. Gießen oder Rakeln des Ausgangsmaterials für die erste Schicht sowie durch Verarbeitungsverfahren unter Druck, wie z. B. Extrudieren, Laminieren, insbesondere Heißlaminieren, Kaschieren, Kalandrieren oder Pressen erfolgen. Dabei kann der so hergestellt Verbundkörper durch Strahlung, elektrochemisch oder thermisch vernetzt bzw. gehärtet werden. Darüber hinaus kann auch das Ausgangsmaterial für die mindestens eine erste Schicht zunächst ganz oder teilweise thermisch vernetzt bzw. gehärtet werden und anschließend, wie oben beschrieben, drucklos oder unter Druck mit der erfindungsgemäß verwendeten zweiten Schicht zusammengebracht werden. Sofern bereits vorgefertigte Folien, d. h. die mindestens eine erste Schicht in Form einer Folie sowie der konventionelle Separator in Form eine Folie zusammengebracht werden sollen, geschieht dies vorzugsweise durch Laminieren, wobei im allgemeinen Temperaturen im Bereich von ungefähr 100 bis ungefähr 160°C, vorzugsweise ungefähr 115 bis ungefähr 140 °C verwendet werden (Heißlaminieren), wobei die jeweils exakt verwendeten Temperaturen insbesondere vom jeweils verwendeten konventionellen Separator abhängen. Dabei kann beispielsweise bei der Verwendung von Polypropylen-Folien bei geringfügig höheren Temperaturen als bei Verwendung von Poylethylen-Folien gearbeitet werden. Auch bei der Herstellung des Verbundkörpers durch Laminieren kann die Zusammensetzung der ersten Schicht ganz oder teilweise vernetzt vorliegen und der nach dem Laminieren erhaltenen Verbundkörper je nach Bedarf nochmals vernetzt oder aber direkt ohne Nachvernetzung eingesetzt werden.

Bei der Verwendung des erfindungsgemäßen Verbundkörpers als Separator in einer elektrochemischen Zelle wird der Verbundkörper mit konventionellen Anoden und Kathoden kombiniert. Darüber hinaus werden eine disoziierbare, Lithiumkationen enthaltende Verbindung, eine sogenanntes Leitsalz und ggf. weitere Zusatzstoffe, wie insbesondere organische Lösungsmittel, ein sogenannter Elektrolyt inkorporiert. Die letztgenannten Stoffe können teilweise oder vollständig bei der Herstellung des erfindungsgemäßen Verbundkörpers beigemischt oder nach der Herstellung desselben eingebracht werden.

Als Leitsalze können die allgemein bekannten und beispielsweise in der EP-A 0 096 629 beschriebenen Leitsalze verwendet werden. Vorzugsweise werden erfindungsgemäß als Leitsalz LiPF₆, LiBF₄, LiClO₄, LiAsF₆, LiCF₃SO₃, LiC(CF₃SO₂)₃, LiN(CF₃SO₂)₂, LiN(SO₂CₙF₂ₙ₊₁)₂, LiC[(CₙF₂ₙ₊₁)SO₂]₃, Li(CₙF₂ₙ₊₁)SO₂, mit n jeweils 2 bis 20, LiN(SO₂F)₂, LiAlCl₄, LiSiF₆, LiSbF₆, (RSO₂)ₙXLi (ₙX = ₁O, ₁S, ₂N, ₂P, ₃C, ₃Si; R= CₘF₂ₘ₊₁ mit m = 0-10 oder C₁-C₂₀-Kohlenwasserstoffe), Li-Imidsalze, Li-Methidsalze, oder ein Gemisch aus zwei oder mehr davon eingesetzt, wobei als Leitsalz vorzugsweise LiPF₆ eingesetzt wird.

Als organische Elektrolytlösungsmittel kommen die vorstehend unter "Weichmachern" diskutierten Verbindungen in Frage, wobei vorzugsweise die üblichen organischen Elektrolyte, bevorzugt Ester wie Ethylencarbonat, Propylencarbonat, Dimethylcarbonat und Diethylcarbonat oder Gemische solcher Verbindungen eingesetzt werden.

Die erfindungsgemäßen Verbundkörper weisen vorteilhaft eine Dicke von 5 bis 500 µm, vorzugsweise 10 bis 500 µm, weiter bevorzugt 10 bis 200 µm und insbesondere 15 bis 100 µm auf.

Der Verbundkörper kann mit den Anoden und Kathoden zu einer elektrochemischen Zelle zusammengebaut werden, die wiederum einen festen Verbund darstellt. Dieser Verbund weist vorteilhaft eine Gesamtdicke von 30 bis 2000 µm, insbesondere eine Gesamtdicke von 50 bis 1000 µm auf.

Ferner betrifft die vorliegende Erfindung ein Verfahren zur Herstellung eines derartigen Verbundkörpers, das die folgenden Stufen umfaßt:
(I) Herstellen mindestens einer ersten Schicht, wie oben definiert;
(II) Herstellen mindestens einer zweiten Schicht, wie oben definiert; und
(III) anschließendes Zusammenbringen der mindestens einen ersten Schicht mit der mindestens einen zweiten Schicht durch ein herkömmliches Beschichtungsverfahren.

Vorzugsweise wird die mindestens eine erste Schicht auf einem temporären Träger hergestellt. Dabei können erfindungsgemäß üblicherweise verwendete temporäre Träger, wie z. B. eine Trennfolie aus einem Polymer oder einem vorzugsweise beschichteten Papier, wie z. B. eine silikonisierte Polyesterfolie eingesetzt werden. Die Herstellung dieser ersten Schicht ist jedoch auch auf einem permanenten Träger, wie z. B. einer Ableiterelektrode oder aber auch ganz ohne Träger möglich.

Das Zusammenbringen bzw. die Herstellung der oben definierten Schichten erfolgt durch drucklose Verfahren zur Beschichtung bzw. Herstellung von Folien, wie z. B. Gießen oder Rakeln, sowie durch Verarbeitungsverfahren unter Druck, wie z. B. Extrudieren, Laminieren, insbesondere Heißlaminieren, Kaschieren, Kalandrieren oder Pressen. Gegebenenfalls kann der so hergestellte Verbundkörper durch Strahlung, elektrochemisch oder thermisch vernetzt bzw. gehärtet werden.

Ferner ist es möglich, durch die oben beschriebenen Verfahren den erfindungsgemäßen Verbundkörper mit herkömmlichen Elektroden zusammenzubringen und so einen Verbund mit den Bestandteilen (Trennfolie/Separator/Elektrode) bereitzustellen.

Ferner ist es möglich durch doppelseitige Beschichtung des Verbundkörpers einen Verbund mit den Bestandteilen Anode/Separator/Kathode zur Verfügung zu stellen.

Dabei kann der Verbundkörper als Separator mit der Anodenfolie und/oder Kathodenfolie zusammen bei Temperaturen > 80 °C laminiert werden. Dabei ist es ohne weiteres möglich, z. B. den erfindungsgemäßen Verbundkörper auf eine herkömmliche Anode oder Kathode zu laminieren, wobei ein Verbund Anodeoder Kathode/Separator erhalten wird, der dann wiederum mit einer herkömmlichen Kathode oder Anode kombiniert werden kann.

Ein wie oben beschriebener Verbund Anode/Separator/Kathode kann auch ohne die Verwendung eines Trägers bzw. der Ableiterelektroden hergestellt werden, da der erfindungsgemäße Verbundkörper enthaltend mindestens eine erste und mindestens eine zweite Schicht, wie oben definiert, an sich eine für die Verwendung in elektrochemischen Zellen ausreichende mechanische Stabilität besitzt.

Die Befüllung derartiger Verbunde bzw. der elektrochemischen Zelle mit einem Elektrolyt und Leitsalz kann sowohl vor dem Zusammenbringen als auch vorzugsweise nach dem Zusammenbringen der Schichten, ggf. nach dem Kontaktieren mit geeigneten Ableiterelektroden, z. B. einer Metallfolie und sogar nach dem Einbringen des Verbundkörpers bzw. des Verbundes in ein Batteriegehäuse erfolgen, wobei die spezielle mikroporöse Struktur der Schichten im erfindungsgemäßen Verbundkörper, insbesondere bedingt durch die Anwesenheit des oben definierten Feststoffs (I), das Aufsaugen des Elektrolyten und des Leitsalzes und die Verdrängung der Luft in den Poren ermöglicht. Das Befüllen kann bei Temperaturen von 0 °C bis ungefähr 100 °C in Abhängigkeit vom verwendeten Elektrolyt durchgeführt werden.

Die erfindungsgemäßen elektrochemischen Zellen können insbesondere als Auto-, Geräte- oder Flachbatterie, Bordbatterie, Batterie für statische Anwendungen, und Batterie für Elektrotraktion verwendet werden.

Der erfindungsgemäße Verbundkörper weist gegenüber den bislang für den Einsatz in elektrochemischen Zellen vorgesehenen Separatoren die folgenden Vorteile auf:
- bedingt durch die Kombination eines konventionellen Separators und der einen Feststoff (I) enthaltenden Zusammensetzung wird ein Verbundkörper erhalten, der außerordentliche mechanische Stabilität, insbesondere eine ausgezeichnete Formstabilität und eine verbesserte Druckfestigkeit aufweist;
- der erfindungsgemäße Verbundkörper kann bei der Batterieherstellung auf handelsüblichen Wickelautomaten, wie sie dort verwendet werden, problemlos eingesetzt werden;
- der erfindungsgemäße Verbundkörper stellt einen Separator mit Abschalt-Mechanismus (Shutdown-Mechanismus) dar.

Die vorliegende Erfindung soll nunmehr noch anhand einiger Beispiele erläutert werden.

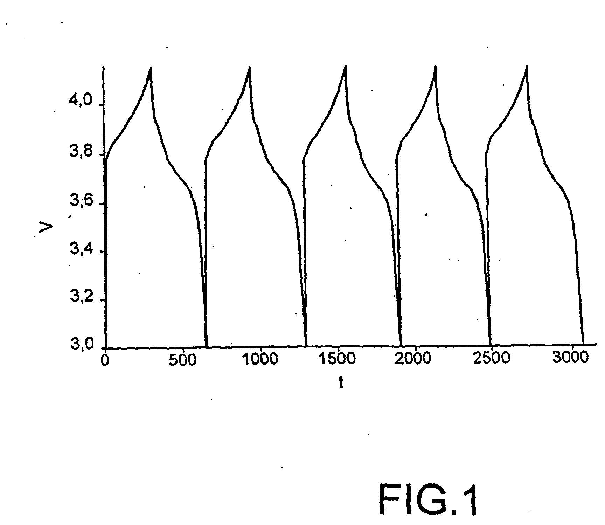

Dabei stellen die Figuren 1 bis 5 jeweils die Ergebnisse der Zyklisierung (Spannung: 4,15 V) der gemäß Beispiel 1 bis 5 erhaltenen elektrochemischen Zellen dar.

### Herstellungsbeispiel 1 (PA1)

Zunächst wurden 800 g Xylol vorgelegt und auf 85 °C erwärmt.

Anschließend wurden ein Zulauf I, bestehend aus einem Gemisch aus

| | |
|---|---|
| 100 g | Laurylacrylat, |
| 300 g | Dihydrodicyclopentadienylacrylat, |
| 120 g | Glycidylmethacrylat, |
| 480 g | Ethylhexylacrylat und |
| 2 g | Mercaptoethanol, und |

ein Zulauf II, bestehend aus

| | |
|---|---|
| 30 g | Wako V 59 (Azostarter V 59) und |
| 200 g | Xylol |

gleichzeitig gestartet.

Zulauf I wurde innerhalb von 1,5 Stunden und Zulauf II innerhalb von 2 Stunden in die Vorlage zugefahren. Dabei wurde die Temperatur zwischen 80 und 90 °C gehalten. Anschließend ließ man 3 Stunden lang bei 90 °C nachreagieren.

Danach wurde eine Zugabe, bestehend aus
166 g 4-Hydroxybenzophenon und
0,83 g Dimethylaminopyridin
zugesetzt. Man ließ 2 bis 3 Stunden weiter reagieren, bis ein Epoxid-Wert von < 0,01 erreicht war.

### Beispiel 1

20 g eines Methacrylsilan hydrophobierten Wollastonit (Tremin® 283-600 MST) wurden in 15 g Aceton dispergiert. Anschließend wurden 54 g einer Lösung von 6 g eines Vinylidenfluorid-Hexafluorpropylen-Copolymers (Kynarflex® 2801, Firma ELF-Atochem) und eine Lösung von 4,6 g des gemäß Herstellungsbeispiels 1 hergestellten PA1 in 34 g Xylol zugegeben. Abschließend wurden noch 2,8 g Tris-(2-ethyl-hexyl)phosphat zugegeben.

Anschließend wurde die so erhaltene Zusammensetzung mit einem Rakel mit einem Gießspalt von 500 µm auf ein Trägermaterial bei 60 °C aufgetragen, die Lösungsmittel innerhalb von 5 min entfernt und nach dem Abziehen der getrockneten Beschichtung ein ungefähr 27 µm dicker Film erhalten.

Der so erhaltenen Film wurde bei einer Laminatorrollen-Temperatur von 115 °C mit einer kommerziellen mikroporösen PE-Folie von 8 µm Dicke (Celgard®) ohne weiter Zusatzstoffe zusammenlaminiert. Zur Laminierung wurde ein Laminator der Firma Ibico verwendet. Nach Beendigung der Laminierung wurde die auf die mikroporöse PE-Folie laminierte Schicht 5 min lang bei 5 cm Abstand unter einem Feld. aus superaktinischen Leuchtstoffröhren (TL 09, Firma Philips) photovernetzt.

Der so erhaltene Verbundkörper wurde als Separator verwendet und zusammen mit LiCoO₂ als Kathode und Graphit als Anode zu einer "Sandwich"-Zelle zusammengebaut. Unter Verwendung von LiPF₆ als Leitsalz und einem 1:1-Gemisch aus Ethylencarbonat und Diethylencarbonat als Flüssigelektrolyt wurde eine elektrochemische Zelle erhalten, die unter Anlegen einer Spannung von 4,15V zyklisiert wurde.

Die mit dieser Zelle erreichten spezifischen Batteriedaten ergaben sich wie folgt:

### Batterietest

Kathodenfläche: 1 cm²
Anodenfläche: 1 cm²
Flächengewicht Kathode: 270 g/m²
Elektrolyt: 1M LiPF₆ / Ethylencarbonat (EC):Diethylencarbonat (DEC) = 1:1

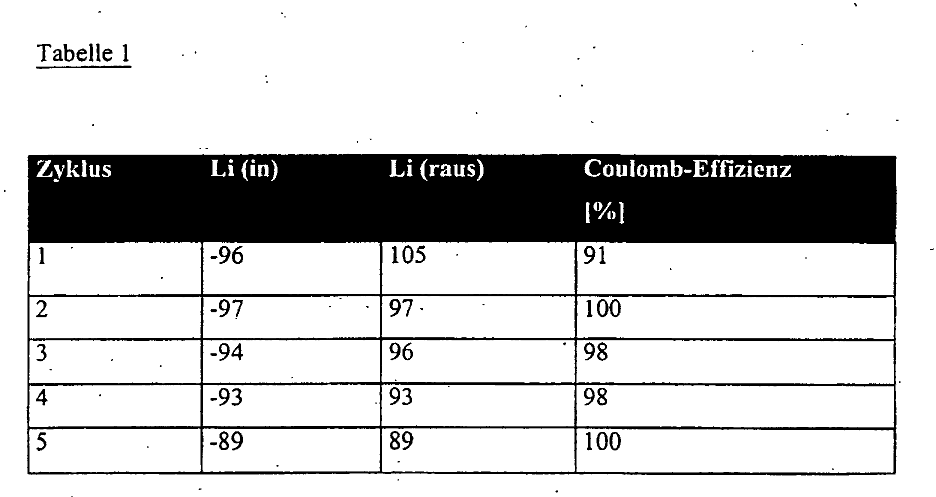

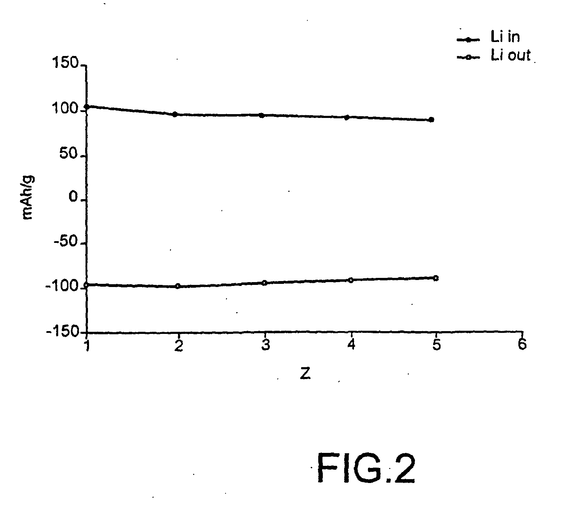

Die Ergebnisse dieser Zyklisierung sind in obiger Tabelle 1 bzw. in Fig. 1 und 2 dargestellt. Dabei zeigt Fig. 1 den zeitlichen Ablauf der Lade- und Entladeversuche, wobei V für die angelegte Spannung und t für die verstrichene Zeit steht. Es fällt auf, daß sich die Lade- bzw. Entladekapazität der Sandwich-Zelle gemäß Beispiel 1 über die Zeit nicht ändert. Dies wird durch Fig. 2 bestätigt, in der die spezielle Lade- bzw. Entladekapazität [mAh/g] gegen die Anzahl der Zyklen (Z) aufgetragen ist. Wie sich daraus ergibt, besaß diese Zelle bei z. B. der 5. Zyklisierung eine spezifische Ladekapazität an der Kathode von 89 mAh/g.

### Beispiel 2

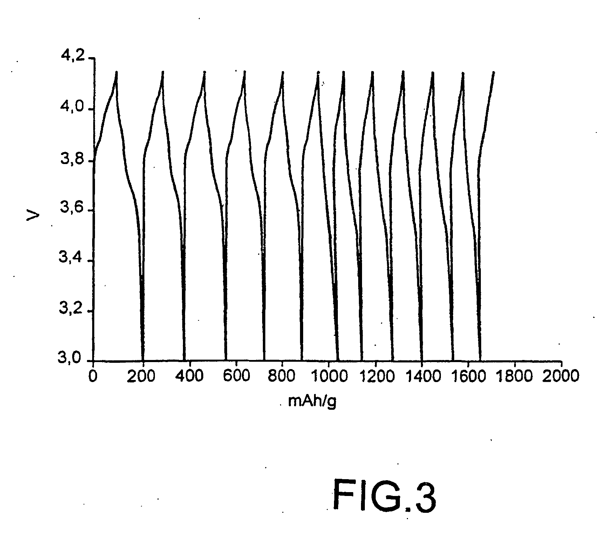

Es wurde ein Verbundkörper analog Beispiel 1 unter Verwendung von PA1 als Vemetzersystem hergestellt, wobei jedoch der zunächst erhaltene Film unter den Bedingungen gemäß Beispiel 1 2 Sekunden lang belichtet wurde und anschließend analog Beispiel 1 mit der PE-Folie zusammengebracht wurde. Der so erhaltene Verbundkörper wurde anschließend wie in Beispiel 1 UV-belichtet und als Separator eingesetzt. Tabelle 2 und Fig. 3 zeigen die Ergebnisse der Untersuchungen bzgl. der elektrochemischen Aktivität.

**Tabelle 2**

| Zyklus Nr. | Halbzyklus | Stromdichte [mA/cm²] | spezifische Kapazität [mAh/g] | |
|---|---|---|---|---|
| | | | Ladung | Entladung |
| 1 | c (Li raus) | 0,5 | 111,6 | |
| | d (Li in) | -1,0 | | 89,1 |
| 2 | c (Li raus) | 0,5 | 94,8 | |
| | d (Li in) | -1,0 | | 88,3 |
| 3 | c (Li raus) | 0,5 | 89,2 | |
| | d (Li in) | -1,0 | | 85,5 |
| 4 | c (Li raus) | 0,5 | 85,7 | |
| | d (Li in) | -1,0 | | 83,5 |
| 5 | c (Li raus) | 0,5 | 84,6 | |
| | d (Li in) | -1,0 | | 82,1 |
| 6 | c (Li raus) | 0,5 | 82,9 | |
| | c (Li raus) | 0,25 | 6,4 | |
| | d (Li in) | -3,0 | | 59,5 |
| 7 | c (Li raus) | 1,0 | 48,7 | |
| | d (Li in) | -2,0 | | 66,7 |
| 8 | c (Li raus) | 1,0 | 65,0 | |
| | d (Li in) | -2,0 | | 66,6 |
| 9 | c (Li raus) | 1,0 | 66,7 | |
| | d (Li in) | -2,0 | | 65,8 |
| 10 | c (Li raus) | 1,0 | 66,1 | |
| | d (Li in) | -2,0 | | 64,7 |
| 11 | c (Li raus) | 1,0 | 65,1 | |
| | d (Li in) | -2,0 | | 63,6 |
| 12 | c (Li raus) | 0,5 | 72,5 | |
| | c (Li raus) | 0,25 | 6,0 | |

Bei der 5. Zyklisierung wurde für diese Zelle eine Entladekapazität von ca. 82 mAh/g erhalten.

### Beispiel 3

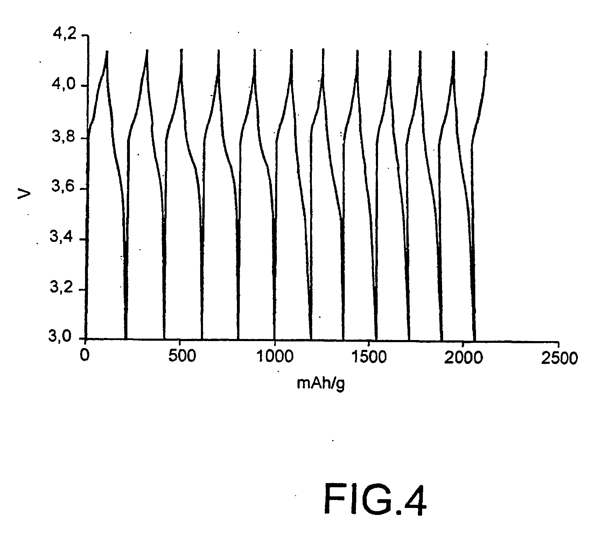

Es wurde eine elektrochemische Zelle analog Beispiel 2 hergestellt, wobei gemäß Beispiel 3 der zunächst erhaltene Verbundkörper nicht mehr UV-nachbelichtet wurde. Anschließend wurde analog Beispiel 1 bzw. Beispiel 2 zyklisiert. Die Ergebnisse dieser Zyklisierung sind in Tabelle 3 bzw. Fig. 4 gezeigt.

**Tabelle 3**

| Zyklus Nr. | Halbzyklus | Stromdichte [mA/cm²] | spezifische Kapazität [mAh/g] | |
|---|---|---|---|---|
| | | | Ladung | Entladung |
| 1 | c (Li raus) | 0,5 | 126,0 | |
| | d (Li in) | -1,0 | | 97,9 |
| 2 | c (Li raus) | 0,5 | 100,3 | |
| | d (Li in) | -1,0 | | 97,2 |
| 3 | c (Li raus) | 0,5 | 100,8 | |
| | d (Li in) | -1,0 | | 96,9 |
| 4 | c (Li raus) | 0,5 | 99,5 | |
| | d (Li in) | -1,0 | | 96,2 |
| 5 | c (Li raus) | 0,5 | 99,0 | |
| | d (Li in) | -1,0 | | 95,5 |
| 6 | c (Li raus) | 0,5 | 97,6 | |
| | c (Li raus) | 0,25 | 5,4 | |
| | d (Li in) | -3,0 | | 91,1 |
| 7 | c (Li raus) | 1,0 | 83,7 | |
| | d (Li in) | -2,0 | | 88,4 |
| 8 | c (Li raus) | 1,0 | 89,3 | |
| | d (Li in) | -2,0 | | 88,1 |
| 9 | c (Li raus) | 1,0 | 89,9 | |
| | d (Li in) | -2,0 | | 88,0 |
| 10 | c (Li raus) | 1,0 | 89,6 | |
| | d (Li in) | -2,0 | | 87,5 |
| 11 | c (Li raus) | 1,0 | 88,6 | |
| | d (Li in) | -2,0 | | 86,8 |
| 12 | c (Li raus) | 0,5 | 94,5 | |
| | c (Li raus) | 0,25 | 4,5 | |

Bei der 5. Zyklisierung wurde für diese Zelle eine Entladekapazität von ca. 95,5 mAh/g erhalten.

### Beispiel 4

Zunächst wurde ein Film gemäß Beispiel 1 hergestellt und in unbelichtetem Zustand auf eine Anode (Graphit auf Cu-Folie) bei 140 °C laminiert und der so erhaltene Verbund mit einer 8 µm dicken mikroporösen PE-Folie (Celgard®) bei 115 °C laminiert.

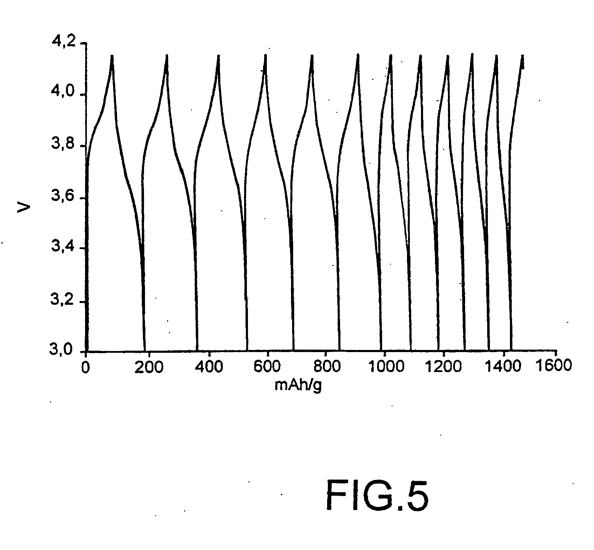

Unter Verwendung von LiCoO₂ als Kathode wurde eine "Sandwich"-Zelle analog Beispiel 1 zusammengebaut und bzgl. ihrer elektrochemischen Aktivität untersucht. Die Ergebnisse sind in Tabelle 4 bzw. Fig. 5 gezeigt.

**Tabelle 4**

| Zyklus Nr. | Halbzyklus | Stromdichte [mA/cm²] | spezifische Kapazität [mAh/g] | |
|---|---|---|---|---|
| | | | Ladung | Entladung |
| 1 | c (Li raus) | 0,5 | 108,4 | |
| | d (Li in) | -1,0 | | 81,2 |
| 2 | c (Li raus) | 0,5 | 91,0 | |
| | d (Li in) | -1,0 | | 83,7 |
| 3 | c (Li raus) | 0,5 | 88,4 | |
| | d (Li in) | -1,0 | | 81,7 |
| 4 | c (Li raus) | 0,5 | 85,4 | |
| | d (Li in) | -1,0 | | 79,7 |
| 5 | c (Li raus) | 0,5 | 82,1 | |
| | d (Li in) | -1,0 | | 77,0 |
| 6 | c (Li raus) | 0,5 | 77,9 | |
| | c (Li raus) | 0,25 | 4,2 | |
| | d (Li in) | -3,0 | | 62,3 |
| 7 | c (Li raus) | 1,0 | 49,3 | |
| | d (Li in) | -2,0 | | 51,8 |
| 8 | c (Li raus) | 1,0 | 49,9 | |
| | d (Li in) | -2,0 | | 47,2 |
| 9 | c (Li raus) | 1,0 | 46,6 | |
| | d (Li in) | -2,0 | | 43,9 |
| 10 | c (Li raus) | 1,0 | 43,7 | |
| | d (Li in) | -2,0 | | 41,3 |
| 11 | c (Li raus) | 1,0 | 41,1 | |
| | d (Li in) | -2,0 | | 38,8 |
| 12 | c (Li raus) | 0,5 | 54,3 | |
| | c (Li raus) | 0,25 | 5,0 | |

Bei der 5. Zyklisierung wurde für diese Zelle eine Entladekapazität von 77 mAh/g erhalten.

Im folgenden werden Beispiele 5 und 6 beschrieben, die allesamt die Herstellung eines erfindungsgemäßen Verbundkörpers betreffen, der dann analog den in Beispielen 1 bis 4 beschriebenen Verbundkörpern in elektrochemischen Zellen eingesetzt werden können.

### Beispiel 5

Eine Suspension bestehend aus

| | |
|---|---|
| 20 g | Wollastonit Tremin® 800 EST |
| 34 g | Xylol |
| 6 g | Kynarflex® 2801 |
| 2,9 g | Tris(2-ethylhexyl)phosphat |
| 15 g | Aceton |
| 4,6 g | einer Lösung, bestehend aus |

| | |
|---|---|
| 100 g | Laurylacrylat |
| 300 g | Dihydrodicyclopentadienylacrylat |
| 120 g | Glycidylmethacrylat |
| 480 g | Ethylhexylacrylat |
| 2 g | Mercaptoethanol |

| | |
|---|---|
| 30 g | Wako® V79 |
| 200 g | Xylol |
| 166 g | 4-Hydroxybenzophenon. |
| 0,83 g | Dimethylaminopyrridin |

wurde auf eine mikroporöse Polyolefinfolie (Celgard® 2300) aufgerakelt, bei RT getrocknet und photochemisch wie in Beispiel 1 beschrieben ausgehärtet und in Vakuum (< 0,1 mbar) getrocknet.

### Beispiel 6

Eine Suspension bestehend aus

| | |
|---|---|
| 30 g | Kynarflex® 2801 |
| 20 g | Aerosil® |
| 12,5 g | Dibutylphtalat |
| 200 g | Aceton |

wurde auf eine mikroporöse Polyolefinfolie (Celgard® 2300) aufgerakelt und bei RT getrocknet. Anschließend wurde der Verbundkörper mit Diethylether mehrmals extrahiert.

## Patentansprüche

1. Verbundkörper, umfassend mindestens eine Schicht, die eine Zusammensetzung enthaltend
(a) 1 bis 99 Gew.-% eines Feststoffs (I) mit einer Primärpartikelgröße von 5 nm bis 100 µm oder ein Gemisch aus mindestens zwei Feststoffen,
(b) 99 bis 1 Gew.- % eines polymeren Bindemittels (II), das umfaßt:
(IIa) 1 bis 100 Gew.-% eines Polymers oder Copolymers (IIa), das ketten-, end- und/oder seitenständig Reaktivgruppen (RG) aufweist, die thermisch und/oder unter UV-Strahlung zu Vernetzungsreaktionen fähig sind, und
(IIb) 0 bis 99 Gew.-% mindestens eines Polymers oder Copolymers {IIb), das frei ist von Reaktivgruppen RG,
umfaßt, wobei die mindestens eine Schicht auf mindestens eine zweite Schicht, umfassend mindestens einen konventionellen Separator, aufgebracht ist,
**dadurch gekennzeichnet, daß**
der konventionelle Separator ausgewählt wird aus der Gruppe bestehend aus:
Separatoren auf der Basis von mikroporösen Polyolefin-Folien; mikroporösen Polytetrafluorethylen (PTFE)-Folien; Vliese, Fasern und nicht gewebte. Textilverbundstoffe, herstellbar unter Verwendung von faserförmigen Polymermaterialien; Nafion®-Folien; Folien auf der Basis eines Copolymerisats aus Vinylidendifluorid und Hexafluorpropen;
füllstoffhaltige, durch Extrusion erhältliche Homo-, Block- und Copolymere, hergestellt aus olefinischen Kohlenwasserstoffen, aromatischen Kohlenwasserstoffen, Acrylsäure- oder Methacrylsäureestern, Acrylnitril, Methacrylnitril, N-Methylpyrrolidon, N-Vinylimidazol, Vinylacetat, Vinylethern, oder halogenhaltigen olefinischen Verbindungen, wobei als Füllstoffe in diesen Polymeren Feststoffe (I) eingesetzt werden.

2. Verbundkörper nach Anspruch 1, wobei der mindestens eine konventionelle Separator ausgewählt wird aus der Gruppe bestehend aus einer mikroporösen Polyolefin-Folie und einer Polytetrafluorethylen-Folie.

3. Verbundkörper nach Anspruch 1 oder 2, wobei der Feststoff I ausgewählt wird aus der Gruppe bestehend aus einem anorganischen Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid; Polyamiden; Polyimiden; und einer Feststoffdispersion enthaltend ein derartiges Polymer; und einem Gemisch aus zwei oder mehr davon.

4. Verbundkörper nach einem der Ansprüche 1 bis 3, wobei das Polymer IIa ketten-, end- und/oder seitenständig mindestens eine Reaktivgruppe RGa aufweist, die thermisch und/oder unter UV-Strahlung im Triplett angeregten Zustand zur Wasserstoffabstraktion befähigt ist, und ketten-, end- und/oder seitenständig mindestens eine von RGa verschiedene, mit RGa coreaktive Gruppe RGb aufweist, wobei im Durchschnitt aller Polymermoleküle mindestens je eine Gruppe RGa und eine Gruppe RGb vorhanden ist, wobei die Gruppe RGb ausgewählt wird unter Gruppen, die mit angeregten Norrish II-Photoinitiator-Gruppen wechselwirken können.

5. Verbundkörper nach einem der Ansprüche 1 bis 4, wobei das Polymet IIa ein Polymer oder Copolymer eines Acrylats oder Methacrylats ist, und Reaktivgruppen RGa, die Benzophenon-Einheiten enthalten, und Reaktivgruppen RGb, die Dihydrodicyclopentadien-Einheiten enthalten, aufweist.

6. Verbundkörper nach einem der Ansprüche 1 bis 5, wobei das Polymer IIb ausgewählt wird aus der Gruppe bestehend aus einem Polymer oder Copolymer des Vinylchlorids, Acrylnitrils, Vinylidenfluorids; einem Copolymer aus Vinychlorid und Vinylidenchlorid, Vinylchlorid und Acrylonitril, Vinylidenfluorid und Hexafluropropylen, Vinylidenfluorid mit Hexafluoropropylen; einem Terpolymer aus Vinylidenfluorid und Hexafluorpropylen sowie einem Mitglied der Gruppe bestehend aus Vinylfluorid, Tetrafluorethylen und Trifluorethylen.

7. Verbundkörper nach einem der Ansprüche 1 bis 6, wobei das Polymer IIa ein Polymer wie in Anspruch 5 definiert ist, und das Polymer IIb ein Copolymer aus Vinylidenfluorid und Hexafluorpropylen ist.

8. Verwendung mindestens einer Verbundkörpers gemäß einem der Ansprüche 1 bis 7 als Separator.

9. Elektrochemische Zelle, umfassend einen Separator gemäß Anspruch 8.

10. Verfahren zur Herstellung eines Verbundkörpers gemäß einem der Ansprüche 1 bis 7, das die folgenden Stufen umfaßt:
(I) Herstellen mindestens einer ersten Schicht, wie in einem der Ansprüche 1 bis 7 definiert;
(II) anschließendes Zusammenbringen der mindestens einen ersten Schicht mit der mindestens einen zweiten Schicht, umfassend den mindestens einen konventionellen Separator.

11. Verfahren nach Anspruch 10, wobei das Zusammenbringen der mindestens einen Schicht und der mindestens einen zweiten Schicht, umfassend mindestens einen Separator, durch Auftakeln der mindestens einen Schicht auf den mindestens einen konventionellen Separator oder durch Laminieren, vorzugsweise Heißlaminieren, der mindestens einen Schicht auf den mindestens einen Separator erfolgt.

## Claims

1. A composite comprising at least one layer which comprises a composite comprising
(a) from 1 to 99% by weight of a solid (I) with a primary particle size of from 5 nm to 100 µm or a mixture made from at least two solids,
(b) from 99 to 1% by weight of a polymeric binder (II) which includes:
(IIa) from 1 to 100% by weight of a polymer or copolymer (IIa) which has, along the chain, terminally and/or laterally, reactive groups (RG) which are capable of crosslinking reactions when exposed to heat and/or UV radiation, and
(IIb) from 0 to 99% by weight of at least one polymer or copolymer (IIb) which is free from reactive groups RG,
where the at least one layer has been applied to at least one second layer comprising at least one conventional separator,
wherein
the conventional separator is selected from the group consisting of:
separators based on microporous polyolefin films; microporous polytetrafluoroethylene (PTFE) films; nonwovens, fibers, and non-woven textile composites which can be produced using fibrous polymer materials; Nafion® films; films based on a copolymer made from vinylidene difluoride and hexafluoropropene;
filled, extrudable homopolymers, block polymers or copolymers, in each case prepared from olefinic hydrocarbons, aromatic hydrocarbons, acrylic esters or methacrylic esters, acrylonitrile, methacrylonitrile, N-methylpyrrolidone, N-vinylimidazole, vinyl acetate, vinyl ethers, or halogen-containing olefinic compounds, where solids (I) are used as fillers in these polymers.

2. A composite as claimed in claim 1, where the at least one conventional separator is selected from the class consisting of a microporous polyolefin film and a polytetrafluoroethylene film.

3. A composite as claimed in claim 1 or 2, where the solid I is selected from the class consisting of an inorganic solid, selected from the class consisting of oxides, mixed oxides, silicates, sulfates, carbonates, phosphates, nitrides, amides, imides and carbides of elements of the 1^{st}, 2^{nd}, 3^{rd} or 4^{th} principal group, or the 4^{th} transition group, of the periodic table; a polymer selected from the class consisting of polyethylene, polypropylene, polystyrene, polytetrafluoroethylene and polyvinylidene fluoride; polyamides; polyimides; and a solid dispersion comprising a polymer of this type; and a mixture of two or more of these.

4. A composite as claimed in any one of claims 1 to 3, where the polymer IIa has, along the chain, terminally and/or laterally, at least one reactive group RGa which is capable of hydrogen abstraction when exposed to heat and/or UV radiation, in the triplet excited state, and has, along the chain, terminally and/or laterally, at least one group RGb different from RGa and coreactive with RGa, where on average across all of the polymer molecules there is at least one group RGa and at least one group RGb, the group RGb being selected from groups which can interact with excited Norrish II photoinitiator groups.

5. A composite as claimed in any one of claims 1 to 4, where the polymer IIa is a polymer or copolymer of an acrylate or methacrylate and has reactive groups RGa which contain benzophenone units and reactive groups RGb which contain dihydrodicyclopentadiene units.

6. A composite as claimed in any one of claims 1 to 5, where the polymer IIb is selected from the class consisting of a polymer or copolymer of vinyl chloride, of acrylonitrile or of vinylidene fluoride; a copolymer made from vinyl chloride and vinylidene chloride, vinyl chloride and acrylonitrile, vinylidene fluoride and hexafluoropropylene or vinylidene fluoride with hexafluoropropylene; a terpolymer made from vinylidene fluoride and hexafluoropropylene, and also a member of the class consisting of vinyl fluoride, tetrafluoroethylene and trifluoroethylene.

7. A composite as claimed in any one of claims 1 to 6, where the polymer IIa is a polymer as defined in claim 5 and the polymer IIb is a copolymer made from vinylidene fluoride and hexafluoropropylene.

8. The use of at least one composite as claimed in any one of claims 1 to 7 as separator.

9. An electrochemical cell comprising a separator as claimed in claim 8.

10. A process for producing a composite as claimed in any one of claims 1 to 7, which comprises the following stages:
(I) producing at least one first layer as defined in any one of claims 1 to 7;
(II) then combining the at least one first layer with the at least one second layer comprising the at least one conventional separator.

11. A process as claimed in claim 10, where, to combine the at least one layer with the at least one second layer, comprising at least one separator, the at least one layer is applied by doctoring to the at least one conventional separator, or the at least one layer is laminated, preferably hot-laminated, to the at least one separator.

## Revendications

1. Corps composites comprenant au moins une couche comprenant une composition contenant
(a) une matière solide (I) présentant une granulométrie comprise entre 5 nm et 100 µm ou un mélange constitué d'au moins deux matières solides, à raison de 1% à 99% en poids,
(b) un liant polymère (II), à raison de 99% à 1% en poids, comprenant
(IIa) un polymère ou un copolymère (IIa), à raison de 1% à 100% en poids, présentant des groupes réactifs (RG) dans la chaîne, terminaux et/ou latéraux qui sont, sous effet thermique et/ou de rayons UV, aptes à une réaction de réticulation, et
(IIb) au moins un polymère ou un copolymère (IIb) à raison de 0 à 99% en poids, qui est exempt de groupes réactifs RG,
dans lesquels la couche au nombre d'au moins une, repose sur au moins une deuxième couche comprenant au moins un séparateur classique,
**caractérisés en ce que**
l'on choisit le séparateur classique dans le groupe formé par les séparateurs à base de feuille de polyoléfine microporeuse ; les feuilles de polytétrafluoréthylène (PTFE) microporeuses ; les tissus non-tissés, les fibres et les matières composites textiles non-tissés que l'on peut préparer en mettant en oeuvre des matières polymères sous forme de fibres ; les feuilles Nafion® ; les feuilles à base d'un copolymère constitué du fluorure de vinylidène et de l'hexafluoropropène ;
les copolymères, les homopolymères et les polymères séquencés que l'on peut obtenir par extrusion, contenant des charges et préparés à partir des hydrocarbures oléfiniques, des hydrocarbures aromatiques, des esters de l'acide acrylique ou de l'acide méthacrylique, l'acrylonitrile, du méthacrylonitrile, de la N-méthylpyrrolidone, du N-vinylimidazole, de l'acétate de vinyle, des éthers vinyliques ou des composés halogénés oléfiniques, où l'on met en oeuvre dans ces polymères, en tant que charges, des matières solides (I).

2. Corps composites selon la revendication 1, pour lesquels on choisit le séparateur classique au nombre d'au moins un, dans le groupe formé par les feuilles de polyoléfine microporeuses et les feuilles de polytétrafluoréthylène.

3. Corps composites selon la revendication 1, pour lesquels on choisit la matière solide I dans le groupe formé par une matière solide inorganique choisie dans le groupe formé par les oxydes, les oxydes mixtes, les silicates, les sulfates, les carbonates, les phosphates, les nitrures, les amides, les imides et les carbures des éléments du Groupe Principal I, II, III ou IV ou du Groupe Secondaire IV de la Classification des Eléments ; un polymère choisi dans le groupe formé par le polyéthylène, le polypropylène, le polystyrène, le polytétrafluoréthylène, le poly(fluorure de vinylidène) ; les polyamides ; les polyimides ; et les dispersions de matière solide contenant un polymère d'un tel type ; et un mélange constitué de deux ou de plus des composés cités.

4. Corps composites selon l'une quelconque des revendications 1 à 3, dans lesquels le polymère IIa présente au moins un groupe réactif RGa dans la chaîne, terminal et/ou latéral qui est, sous effet thermique et/ou de rayons UV, à l'état triplet et activé, apte à une abstraction de l'hydrogène, et présente au moins un groupe réactif RGb dans la chaîne, terminal et/ou latéral qui est différent du RGa et coréactif avec RGa, et dans lesquels, en moyenne calculée en tenant compte de tous les molécules polymères, au moins un groupe RGa et au moins un groupe RGb sont présents, le groupe RGb étant choisi parmi les groupes aptes à une interaction avec les groupes photoamorceurs Norrish II activés.

5. Corps composites selon une quelconque des revendications 1 à 4, dans lesquels le polymère IIa est un polymère ou un copolymère de l'acrylate ou du méthacrylate et présente des groupes réactifs RGa contenant des séquences benzophénone ainsi que des groupes réactifs RGb contenant des séquences dihydrodicyclopentadiène.

6. Corps composites selon l'une quelconque des revendications 1 à 5, pour lesquels on choisit le polymère IIb dans le groupe formé par un polymère ou copolymère du chlorure de vinyle, de l'acrylonitrile ou du fluorure de vinylidyne ; un copolymère constitué du chlorure de vinyle et du chlorure de vinylidène, du chlorure de vinyle et de l'acrylonitrile, du fluorure de vinylidène et de l'hexafluoropropylène, du fluorure de vinylidène avec l'hexafluoropropylène ; un terpolymère constitué du fluorure de vinylidyne et de l'hexafluoropropylène ; ainsi qu'un élément du groupe formé par le fluorure de vinyle, le tétrafluoréthylène et le trifluoréthylène.

7. Corps composites selon l'une quelconque des revendications 1 à 6, dans lesquels le polymère IIa prend la signification du polymère selon la revendication 5, et dans lesquels le polymère IIb est un copolymère constitué du fluorure de vinylidène et de l'hexafluoropropylène.

8. Mise en oeuvre d'au moins un corps composite selon l'une quelconque des revendications 1 à 7 en tant que séparateur.

9. Cellule électrochimique comprenant un séparateur selon la revendication 8.

10. Procédé pour la préparation d'un corps composite selon l'une quelconque des revendications 1 à 7, comprenant les étapes suivantes consistant à :
(I) préparer au moins une première couche telle que définie dans l'une quelconque des revendications 1 à 7 ;
(II) puis à réunir la première couche au nombre d'au moins une, et de la deuxième couche au nombre d'au moins une et comprenant le séparateur classique au nombre d'au moins un.

11. Procédé selon la revendication 10, dans lequel on réalise la réunion de la première couche au nombre d'au moins une, et de la deuxième couche au nombre d'au moins une et comprenant le séparateur classique au nombre d'au moins un, au moyen d'une application par raclage de la première couche au nombre d'au moins une sur le séparateur classique au nombre d'au moins un, ou bien au moyen d'un contrecollage à chaud de la première couche au nombre d'au moins une sur le séparateur classique au nombre d'au moins un.
